# FASCICULE DE BREVET EUROPEEN

(11) **EP 0 845 309 B1**
(45) Date de publication et mention de la délivrance du brevet: **31.10.2001**
(21) Numéro de dépôt: 97402837.5
(22) Date de dépôt: 25.11.1997
(51) Int. Cl.: B21B 15/00, B23K 11/06

(54) **Machine automatique de raccordement transversal de bandes métalliques**
Automatische Maschine zum transversal Verbinden von Metallbändern
Automatic machine for transversal connecting of metallic bands

(30) Priorité: 29.11.1996 FR 9614709
(43) Date de publication de la demande: 03.06.1998
(73) Titulaire: VAI CLECIM, 92024 Nanterre Cédex (FR)
(72) Inventeur: Perret, Jean, 42600 Montbrison (FR); Valence, Marc, 92400 Courbevoie (FR); Zennaf, Brahim, 42100 Saint-Etienne (FR); Rivollier, Jean-Pierre, 42400 Saint-Chamond (FR)
(74) Mandataire: Le Brusque, Maurice

(56) Documents cités:
- EP-A- 0 135 133
- EP-A- 0 661 112
- FR-A- 2 703 274
- US-A- 5 125 554

## Description

Dans les installations métallurgiques, en particulier de production de bandes métalliques, on est souvent amené à souder des bandes l'une à la suite de l'autre par soudure électrique. Par exemple, dans des installations de laminage, les bandes laminées sont généralement enroulées en bobine pour passer d'une opération à la suivante. Pour réaliser un travail en continu, par exemple dans les lignes de finition, on doit donc souder l'extrémité aval, dans le sens de défilement, d'une bande en fin de traitement à l'extrémité amont de la bande suivante. On est ainsi amené à réaliser une soudure suivant une ligne transversale, généralement perpendiculaire à l'axe de défilement.

Différents moyens sont utilisés à cet effet. On peut, par exemple, appliquer les extrémités de deux bandes l'une sur l'autre et les souder par passage de courant électrique entre deux molettes se déplaçant transversalement.

Mais, dans certains cas, il est nécessaire que les deux bandes soient soudées bout à bout de façon à ne pas produire de surépaisseur. Il faut alors cisailler les deux extrémités, respectivement aval et amont, des deux bandes, le long de deux lignes parfaitement parallèles, puis les rapprocher l'une de l'autre pour que les bords en vis à vis viennent au contact, la soudure étant produite par étincelage.

Une installation de ce genre comprend donc divers outillages travaillant successivement et placés, généralement, l'un après l'autre le long d'une direction longitudinale de défilement des bandes.

Tout d'abord, les extrémités, respectivement aval et amont de la première et de la seconde bande sont cisaillées par un outillage de coupe qui peut avantageusement comprendre deux cisailles travaillant simultanément et écartées d'une distance constante pour réaliser, sur les extrémités des deux bandes, deux bords parfaitement parallèles, les deux bandes étant maintenues, pendant le cisaillage par des mors de serrage montés sur un bâti fixe.

Ensuite, les deux bords cisaillés sont rapprochés l'un de l'autre et soudés par étincelage. Pendant cette opération, les deux extrémités sont maintenues dans des mors de serrage et, généralement, on laisse entre chaque paire de mors de serrage et le bord correspondant, une distance dite de porte-à-faux permettant la réalisation de la soudure.

De plus, il est nécessaire d'appliquer l'une sur l'autre sous une certaine pression, les extrémités des deux bandes, pour réaliser un effet de forgeage pendant la soudure.

A cet effet, on utilise donc une soudeuse comprenant deux paires de mors de serrage reliés à une source de courant électrique et montés, respectivement, sur un bâti fixe et sur un bâti mobile déplaçable longitudinalement par rapport au bâti fixe pour réaliser le rapprochement des deux bandes et le forgeage de la soudure.

Cependant, le cordon de soudure forme, sur les deux faces de la bande, des bourrelets qui doivent être éliminés pour ne pas gêner le passage de la partie soudée dans les différentes parties de la ligne de traitement. C'est pourquoi la machine comprend habituellement un outillage d'aplanissement de la soudure constituée, le plus souvent, d'une raboteuse munie de couteaux qui éliminent les bourrelets, par déplacement transversal le long de la soudure.

Par ailleurs, la machine est équipée d'un certain nombre de dispositifs annexes, par exemple un ou plusieurs dispositifs boucleurs donnant une certaine latitude de déplacement longitudinal de chaque bande sans agir sur les moyens de défilement, des moyens de centrage pour réaliser l'alignement parfait des deux bandes, ainsi qu'une encocheuse pour éliminer les extrémités de la soudure sur les bords latéraux des deux bandes, en particulier lorsque celles-ci n'ont pas des largeurs identiques.

De telles installations sont donc assez compliquées et très encombrantes, les outillages étant, normalement, placés l'un après l'autre selon l'ordre des opérations à effectuer.

Pour simplifier les opérations, on a déjà proposé d'associer l'outillage de coupe à la soudeuse.

Il faut alors serrer les extrémités des deux bandes dans les deux paires de mors de serrage pour réaliser le cisaillement, desserrer les mors pour régler les distances de porte-à-faux, resserrer les mors, régler la distance entre les bords en vis à vis et réaliser la soudure en exerçant une pression de forgeage.

Ensuite, les deux bandes soudées doivent être déplacées jusqu'à l'outillage d'aplanissement qui comprend également des moyens de serrage pour le maintien des bandes soudées pendant le rabotage.

Toutes ces opérations doivent être effectuées avec une grande précision, par exemple, en utilisant des cales de réglage de la distance entre les extrémités des deux bandes.

L'invention a pour objet de nouvelles dispositions permettant de réaliser une machine plus simple, moins encombrante et moins coûteuse, tout en étant plus performante.

En outre, les dispositions selon l'invention permettent de réaliser facilement le positionnement et le centrage des bandes, de simplifier le fonctionnement et de faciliter l'automatisation des différentes opérations.

L'invention s'applique donc à une machine de raccordement de bandes métalliques défilant suivant un axe longitudinal, et comprenant d'une façon générale :
- un bâti fixe centré sur l'axe de défilement et sur lequel est monté un premier organe de maintien à deux mors pour le serrage de l'extrémité aval, dans le sens de défilement, d'une première bande,
- un bâti mobile centré sur l'axe de défilement et déplaçable parallèlement à celui-ci par rapport au bâti fixe, ledit bâti mobile portant un second organe de maintien à deux mors pour le serrage de l'extrémité amont d'une seconde bande suivant la première et,
- au moins trois outillages pour le raccordement de la seconde bande à la première, respectivement,
- un outillage de coupe comprenant deux cisailles de coupe simultanée de deux bords parallèles en vis à vis, respectivement aval et amont, sur les extrémités des deux bandes, après serrage de celles-ci respectivement dans le premier et le second organes de maintien, le cisaillage de chaque bord étant effectué à une distance déterminée en porte-à-faux par rapport aux mors de serrage correspondants,
- un outillage de soudure des deux bandes bord à bord après rapprochement de ceux-ci par déplacement du bâti mobile,
- un outillage d'aplanissement par enlèvement de matière excédante sur les deux faces des bandes soudées,

Conformément à l'invention, la machine comprend :
- un chariot porte-outils monté coulissant sur un chemin de guidage longitudinal s'étendant sur un premier côté des deux bâtis, parallèlement à l'axe de défilement,
- au moins deux chemins de guidage transversaux ménagés l'un à côté de l'autre sur le chariot porte-outils et perpendiculaires à la direction de défilement,
- au moins deux châssis de support, chacun, de l'un des outillages de raccordement, lesdits châssis de support étant montés coulissants, respectivement, chacun sur l'un desdits chemins de guidage transversaux,
- des moyens de commande du coulissement du chariot porte-outils le long du chemin de guidage longitudinal, pour le positionnement de l'un ou l'autre desdits chemins de guidage transversal, sensiblement dans une position de travail commune, centré sur un plan moyen (Q) orthogonal à l'axe de défilement,
- des moyens de commande du coulissement transversal, l'un après l'autre, de chacun desdits châssis de support d'outillage, sur le chemin de guidage transversal correspondant, après mise en place dudit chemin dans ladite position de travail commune, pour la mise en oeuvre de l'outillage porté par ledit châssis et la réalisation de l'opération correspondante, sur les bords en vis à vis, respectivement aval et amont, des deux bandes.

De façon particulièrement avantageuse, les moyens de commande du coulissement transversal des châssis de support d'outillage sont constitués d'un moyen commun disposé au niveau de la position de travail commune et déplaçable perpendiculairement à l'axe de défilement en prenant appui sur une charpente fixe, ledit moyen commun étant muni d'un organe de saisie susceptible de s'engager de façon amovible sur une partie conjuguée correspondante de chaque châssis de support d'outillage lorsque ledit châssis se trouve dans la position de travail commune.

Dans un mode de réalisation préférentiel, le chariot porte-outils est monté déplaçable sur un chemin de coulissement longitudinal inférieur ménagé sur un plancher à côté de la machine et associé à un chemin parallèle de coulissement supérieur ménagé sur une charpente de support et sur lequel s'engage par coulissement une partie de guidage correspondante, de forme conjuguée, ménagée sur chaque châssis de support d'outillage, ledit chemin longitudinal supérieur comprenant deux parties s'étendant respectivement de part et d'autre d'une interruption placée au niveau du plan de travail commun et de largeur suffisante pour permettre le déplacement transversal de l'un ou l'autre desdits chariots de support d'outillage.

Avantageusement, le moyen commun de commande du coulissement des châssis de support est constitué d'au moins un vérin centré sur un axe parallèle au plan moyen de travail et comprenant un élément fixe monté sur la charpente de support et un élément mobile sur lequel est ménagée une tête d'accrochage ayant un profil, en section transversale, identique à celui du chemin longitudinal supérieur de façon que, dans la position de travail de chaque châssis de support d'outillage, la partie de guidage de celui-ci s'engage sur la tête d'accrochage du vérin.

De préférence, les moyens de commande du coulissement longitudinal du chariot porte-outils comprennent un dispositif de réglage fin pour le positionnement précis d'au moins l'un des chemins de guidage transversal et du châssis de support correspondant par rapport au plan moyen de coulissement transversal et l'organe de saisie du moyen de commande du coulissement s'engage sur la partie conjuguée de chaque châssis de support avec une possibilité de jeu dans le sens longitudinal, permettant le positionnement dudit châssis.

Selon une autre caractéristique préférentielle, l'outillage de coupe de la machine de raccordement comprend deux organes de cisaillage maintenus écartés d'une distance fixe pour la coupe, respectivement, de l'extrémité aval et de l'extrémité amont des deux bandes maintenues, respectivement, par le premier et le second organes de maintien, suivant deux lignes de cisaillement parallèles, écartées l'une de l'autre d'une distance constante et formant deux bords, respectivement amont et aval.

De façon particulièrement avantageuse, les deux organes de cisaillage sont montés sur le chariot porte-outils et le dispositif de réglage détermine, par déplacement longitudinal du chariot, le positionnement précis du premier organe de cisaillage par rapport au premier organe de maintien pour le réglage d'une distance de porte-à-faux déterminée sur l'extrémité aval de la première bande, entre la ligne de cisaillement correspondante et le premier organe de maintien.

De plus, la machine peut être équipée de moyens de déplacement longitudinal du bâti mobile par rapport au bâti fixe permettant le positionnement précis du second organe de maintien par rapport au premier pour le réglage d'une distance de porte-à-faux déterminée entre le second organe de maintien et la ligne de cisaillement de l'extrémité amont de la seconde bande.

Dans un mode de réalisation préférentiel, l'outillage de coupe comprend deux organes de cisaillage définissant respectivement deux plans de cisaillement parallèles écartés d'une distance fixe, qui forment une cisaille double portée- par un châssis de support commun, monté coulissant sur le chariot porte-outils perpendiculairement à l'axe de défilement et comprenant deux bras, respectivement supérieur et inférieur qui s'étendent, respectivement, au-dessus et en dessous du plan de défilement de la bande. Les deux organes de cisaillage sont constitués chacun d'une paire de lames circulaires respectivement supérieure et inférieure montées rotatives autour d'axes parallèles à la direction de défilement, respectivement sur les deux bras du châssis, les deux lames de chaque paire se recouvrant partiellement dans un plan de cisaillement perpendiculaire à l'axe de défilement de la bande.

A la fin du défilement de la première bande et avant la mise en place de la seconde, les deux paires de lames sont préalablement placées du côté opposé au chariot porte outils par avancement du châssis de support, en passant derrière la queue de la première bande. La seconde bande est alors avancée et, après serrage des organes de maintien et réglage des distances de porte-à-faux sur la queue et la tête, respectivement, de la première et de la seconde bande, le cisaillage se fait par traction en ramenant le châssis de support sur le chariot.

De plus, la lame supérieure de chaque paire est avantageusement portée par un montant vertical articulé autour d'un axe horizontal sur le bras de support de façon à pivoter légèrement entre une première position de cisaillage par traction, pour laquelle l'axe de la lame supérieure est décalée en arrière par rapport à l'axe de la lame inférieure, dans le sens de déplacement du châssis vers le chariot, le montant vertical prenant appui sur une butée fixe du bras de support, et une seconde position de cisaillage par poussée pour laquelle l'axe de la lame supérieure est ramené au moins dans le plan vertical passant par l'axe de la lame inférieure lorsque le châssis est repoussé vers les bandes, le montant vertical prenant appui sur une butée réglable.-De la sorte, le cisaillage est fait par traction dans la première position, avant la soudure des bandes mais peut aussi être effectué par poussée après la soudure, dans la seconde position, dans le cas où les bandes doivent être séparées pour refaire la soudure.

Généralement, chaque organe de maintien comprend une paire de mâchoires, respectivement inférieure et supérieure, l'une desdites mâchoires étant fixée sur le bâti correspondant et l'autre mâchoire étant montée déplaçable verticalement sur le bâti, chaque mâchoire étant équipée d'un mors de serrage amovible.

Selon une disposition préférentielle, la mâchoire inférieure est fixée sur le bâti et équipée d'un mors inférieur monté coulissant, perpendiculairement à la direction de défilement, sur la mâchoire inférieure et la mâchoire supérieure est déplaçable verticalement et équipée d'un mors supérieur amovible, pouvant être détaché de la mâchoire supérieure pour reposer sur le mors inférieur, l'ensemble des deux mors pouvant ainsi être retiré de la machine et replacé dans celle-ci par coulissement transversal du mors inférieur sur la mâchoire inférieure.

Avantageusement, au moins l'une des deux mâchoires est munie d'au moins un lardon en double T, mobile verticalement, s'étendant suivant une direction perpendiculaire à la direction de défilement, et ayant une partie externe à section en T, s'étendant en saillie par rapport à la mâchoire, pour s'engager dans une rainure conjuguée du mors correspondant et une partie interne à section en T inversée logée dans un évidement transversal ménagé dans ladite mâchoire et susceptible d'être alimenté en fluide de chaque côté de ladite partie interne en T qui constitue un piston de vérin à double effet, respectivement, pour le clampage du mors sur la mâchoire et pour l'écartement dudit mors.

Lorsque la mâchoire supérieure est mobile verticalement, la mâchoire inférieure étant fixe, la partie supérieure en T de chaque lardon mobile peut être munie, sur sa face supérieure, d'au moins deux galets de roulement prenant appui sur le fond de la rainure pour le support dudit mors avec possibilité de coulissement dans la position soulevée des lardons.

Dans ce cas, la mâchoire supérieure peut-être munie, avantageusement, d'un moyen de fixation à baïonnette du mors supérieur comprenant au moins deux vérins de clampage ayant chacun une tige monté pivotante autour d'un axe vertical, chaque tige étant munie, à son extrémité, de deux parties alignées formant crochets, susceptibles de s'engager dans une cavité ménagée dans le mors en passant par un trou oblong de forme correspondante et de s'appliquer contre le fond de ladite cavité, de part et d'autre du trou oblong, après rotation de la tige, pour le clampage du mors sur la mâchoire.

Par ailleurs, l'un des deux organes de maintien peut être associé à au moins une cale d'épaisseur réglable, interposée entre la mâchoire inférieure et le mors inférieur pour aligner les plans moyens des deux bandes.

L'utilisation, selon l'invention, d'un chariot porte-outils formant magasin permet aussi, pour faciliter l'entretien, d'équiper la machine d'un outillage de remplacement comprenant au moins un organe d'accrochage coulissant monté sur un chemin de guidage transversal ménagé sur le chariot porte-outils et susceptible de s'engager de façon amovible, au moins sur le mors inférieur de chaque organe de maintien pour retirer du bâti au moins le mors inférieur et l'amener sur le chariot porte-outils par coulissement sur le chemin de guidage et, inversement, pour replacer dans le bâti un mors de changement. De préférence, le mors supérieur peut être démonté de la mâchoire et vient reposer sur le mors inférieur pour le démontage et le remontage simultané des deux mors.

Généralement, l'outillage de soudure sera constitué par les deux organes de maintien, respectivement des deux bandes, ces derniers étant reliés à deux pôles d'une source de courant électrique pour la réalisation de la soudure bord à bord par étincelage.

A cet effet, chaque organe de maintien comporte une couche isolante électriquement, interposée entre chaque mors de serrage et la mâchoire de support correspondante, et les mors des deux organes de maintien sont reliées respectivement à deux pôles d'une source de courant électrique par des circuits isolés électriquement pour la réalisation de la soudure par le passage du courant uniquement dans lesdits mors et les deux bandes.

Mais l'utilisation d'un chariot porte-outils déplaçable longitudinalement permet aussi, en cas de besoin, de réaliser la soudure au moyen d'un équipement particulier, tel qu'une torche de soudage au défilé, par exemple à laser, à plasma ou à arc. En effet, une telle torche peut être montée sur un châssis de support déplaçable sur un chemin de guidage transversal du chariot porte-outils pour la soudure des bords en vis à vis, respectivement aval et amont, des deux bandes, après cisaillage et serrage de celles-ci.

Selon une autre caractéristique très avantageuse de l'invention, les réglages de positionnement au moins longitudinal de tous les outillages sont effectués à partir du bâti fixe qui sert de référence commune pour toutes les opérations.

En particulier, après serrage de l'extrémité aval de la première bande, le premier organe de maintien peut rester serré jusqu'à la fin des opérations de raccordement, le bâti fixe servant de référence de positionnement pour tous les outillages et toutes les opérations.

Cependant, dans un autre mode de réalisation, le premier organe de maintien monté sur le bâti fixe est desserré après réalisation de la soudure, le second organe de maintien restant serré pour permettre un centrage des bords soudés sur l'outillage d'aplanissement, par recul du bâti mobile. L'organe de maintien du bâti fixe est alors resserré et l'organe de maintien du bâti mobile est desserré et reculé pour laisser le passage à l'outillage d'aplanissement, puis serré de nouveau sur la bande.

Par ailleurs, le châssis de support de l'outillage d'aplanissement peut avantageusement être muni d'au moins une pièce de guidage horizontal susceptible de s'engager, par déplacement transversal du châssis, sur une partie de profil conjugué ménagée au moins sur la mâchoire mobile de l'organe de support du bâti fixe et formant un rail de guidage horizontal pour l'ajustage automatique de l'outillage d'aplanissement à l'épaisseur de la bande soudée.

D'autres caractéristiques avantageuses sont couvertes par les sous-revendications. Mais l'invention sera mieux comprise par la description suivante d'un mode de réalisation particulier, donné à titre de simple exemple, et représenté sur les dessins annexés.

La figure 1 est une vue schématique, en perspective, de l'ensemble d'une ligne de raccordement de bandes équipée d'une machine selon l'invention.

La figure 2 est une vue schématique de dessus de la machine.

La figure 3 est une vue en perspective schématique de la machine.

La figure 4 est une vue schématique en élévation de la machine de soudage, en coupe suivant la ligne AA de la figure 2.

La figure 5 est une vue en élévation du chariot porte-outils, en coupe suivant la ligne BB de la figure 2.

La figure 6 est une vue en perspective du chariot porte-outils.

La figure 7 est une vue en élévation de l'outillage de coupe.

Les figures 8a et 8b sont des vues de détail de l'outillage de coupe montrant, respectivement, les deux positions des lames de cisaillage.

Les figures 9a à 9i montrent schématiquement les différentes opérations de raccordement.

La figure 10 est une vue partielle, en élévation, du dispositif de rabotage.

La figure 11 est une vue de détail, à échelle agrandie, de l'outil de rabotage.

La figure 12 est une vue en coupe transversale de l'outil de rabotage passant entre les deux paires de mors.

La figure 13 est une vue de détail d'un lardon de clampage.

La figure 14 est une vue en élévation de l'outil de changement des mors.

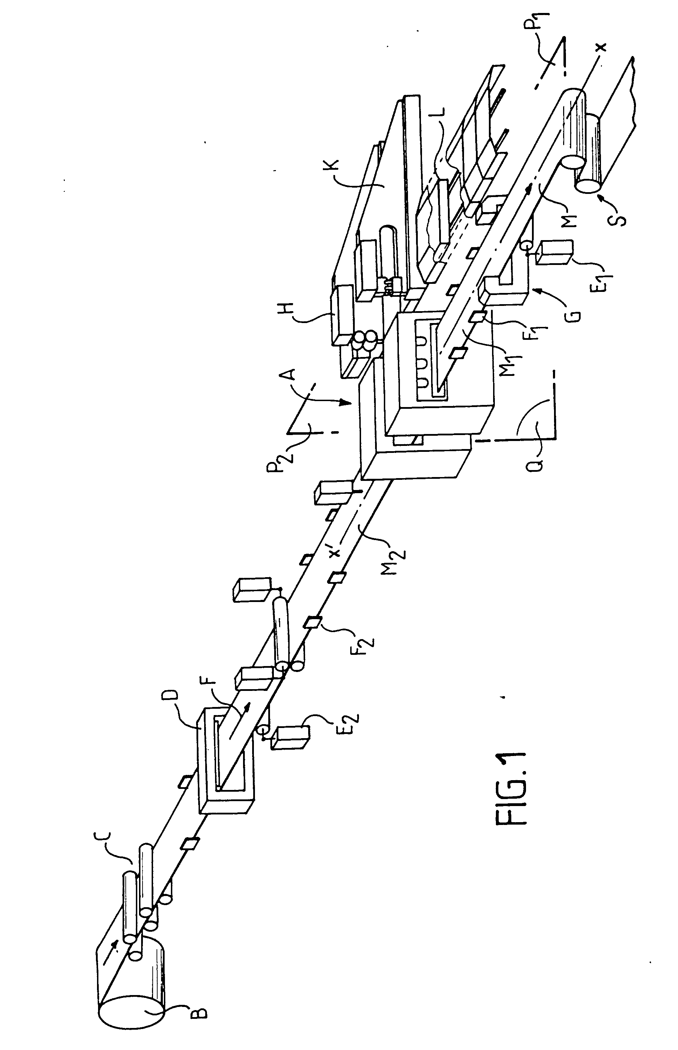

Sur la figure 1, on a représenté schématiquement, en perspective, l'ensemble d'une installation de raccordement d'une bande métallique M se déroulant à partir d'une bobine B suivant une direction longitudinale de défilement x'x, en passant dans une machine A de soudage de l'extrémité aval, dans le sens de défilement, d'une première bande M1 avec l'extrémité amont de la bande suivante M2.

L'installation comprend les dispositifs utilisés habituellement tels qu'une décintreuse C placée immédiatement en aval de la bobine B pour redresser la bande, une cisaille à guillotine D, deux dispositifs boucleurs E1 et E2 placés respectivement en aval et en amont de la machine de soudage A pour permettre des déplacements longitudinaux et transversaux limités des deux bandes M1 et M2 et deux dispositifs de centrage F1, F2 placés respectivement sur le trajet de la première bande M1 et de la seconde bande M2, pour le centrage de celles-ci. Enfin, une encocheuse G est placée à l'aval de la machine de soudage pour supprimer les extrémités du cordon de soudure sur les bords latéraux des deux bandes. Un ensemble S de cylindres décalés, dit "bloc en S", assure l'avancement et la traction de la bande en défilement.

Par ailleurs, la machine comprend un outillage de cisaillage H et une raboteuse K qui, selon l'invention, sont placés sur un chariot porte-outils L déplaçable parallèlement à l'axe de défilement de la bande.

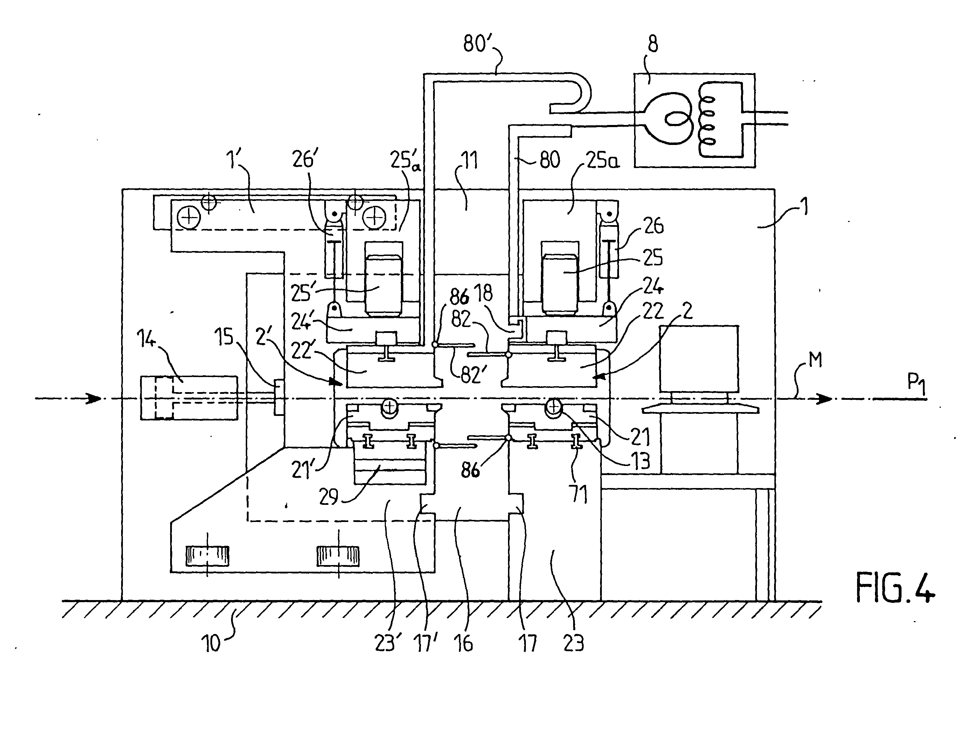

Sur la figure 4, on a représenté schématiquement, en élévation, la machine de soudage comprenant un bâti fixe 1 et un bâti mobile 1' sur lesquels sont montées, respectivement, deux paires de mors de serrage 2, 2'.

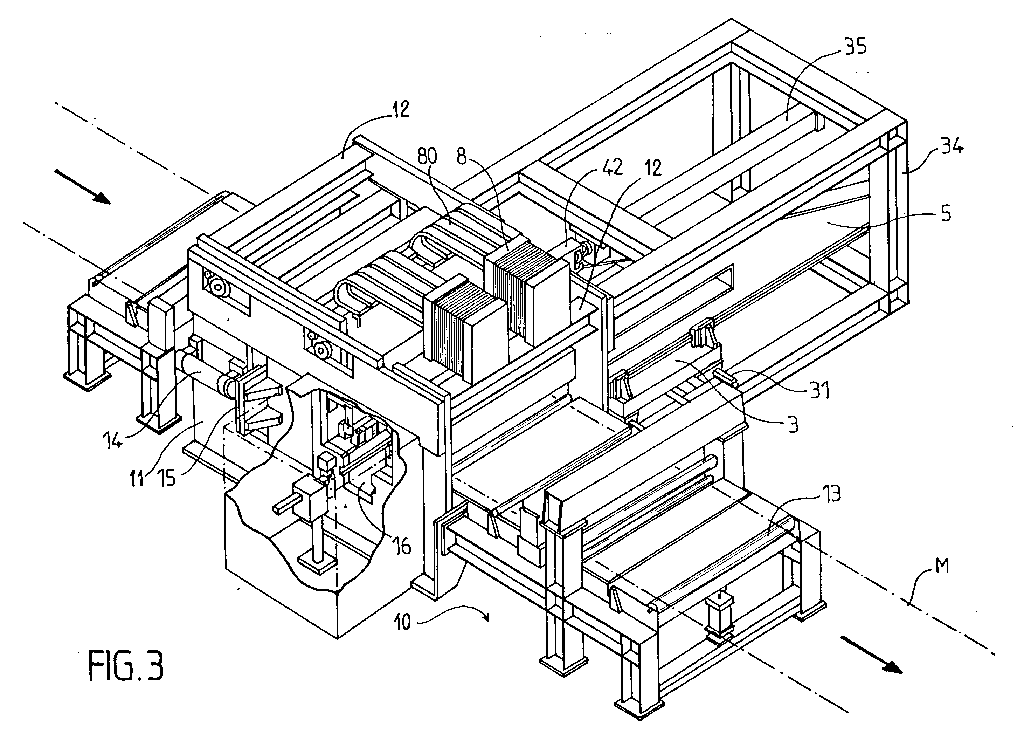

Comme le montre la figure 3 en perspective, le bâti fixe 1 est constitué essentiellement de deux montants rectangulaires 11a, 11b, écartés l'un de l'autre et reliés par des traverses 12 de façon à former une cage rigide fixée sur le massif de fondation 10.

La bande M passe entre les deux montants 11a, 11b suivant un plan moyen de défilement P1 sensiblement horizontal, défini par une série de rouleaux 13.

La bande M est centrée sur un axe longitudinal de défilement x'x placé sensiblement dans le plan longitudinal de symétrie P2 du bâti 1.

Le bâti mobile 1' est également constitué d'une cage qui est montée coulissante, parallèlement à l'axe x'x, entre les deux montants 11a, 11b du bâti fixe 1. Le déplacement du bâti mobile 1' est commandé par deux vérins 14 dont le corps est fixé sur le montant correspondant 11 du bâti fixe 1 et dont la tige prend appui sur une plaque d'appui 15 solidaire du bâti mobile 1' et s'étendant vers l'extérieur en passant dans une fenêtre 16 de chaque montant 11a, 11b.

Comme on l'a indiqué, le bâti fixe 1 et le bâti mobile 1' portent chacun un organe, respectivement 2, 2', de maintien de la bande constitué d'une paire de mors de serrage.

Le premier organe de maintien 2, monté sur le bâti fixe 1, comprend un mors inférieur 21 et un mors supérieur 22 fixés, respectivement sur une mâchoire inférieure 23 et une mâchoire supérieure 24.

La mâchoire inférieure 23 forme un socle fixe solidaire des deux montants 11a, 11b du bâti fixe 1 et prenant appui sur le massif de fondation 10.

La mâchoire supérieure 24 est montée coulissante verticalement entre les deux montants 11a et 11b et peut être actionnée par au moins un vérin 25 dont le corps est ménagé sur une traverse 25a prenant appui sur les deux montants 11a, 11b du bâti fixe 1. De préférence, on place sur la traverse 25a plusieurs vérins 25 répartis sur la largeur de la machine et pouvant être alimentés sélectivement.

Avantageusement, on utilise des vérins 25 à simple effet et de grande puissance pour le serrage des deux mors et le déplacement à vide de la mâchoire supérieure 24 est commandé par des vérins à double effet 26.

Le second organe de maintien 2' est réalisé d'une façon analogue et comprend donc un mors inférieur 21' et un mors supérieur 22'. Le mors inférieur 21' est monté sur une mâchoire inférieure 23' ménagée sur une traverse du bâti mobile 1' et le mors supérieur 22' est fixé sur une mâchoire supérieure 24' qui peut être serrée par des vérins 25' et est déplacée verticalement par des vérins à double effet 26'.

De la sorte, la bande M de métal qui se déplace à l'intérieur des deux bâtis 1, 1' le long du plan P1 de défilement passe entre les deux organes de maintien 2, 2' qui sont représentés en position ouverte sur la figure 4. Au moyen des vérins de serrage 25 et 25', il est possible de bloquer, respectivement l'extrémité aval ou " queue " de la première bande M1 entre les mors 21, 22 et l'extrémité amont ou "tête" de la bande suivante M2 entre les mors 21', 22' du second organe de maintien 2', en actionnant le nombre voulu de vérins 25, 25' selon la largeur de la bande.

Par ailleurs, comme le montre schématiquement la figure 4, les deux organes de maintien 2, 2' sont reliés, respectivement, par des conducteurs 80, 80', aux deux pôles d'une source de courant électrique 8, de façon à réaliser la soudure après serrage des extrémités des deux bandes entre les deux paires de mors qui servent donc d'électrodes.

Sur un côté du bâti fixe 1 est placé, d'autre part, un chariot porte-outils 3 qui peut se déplacer par coulissement sur deux rails 31 fixés sur le massif de fondation 10 et parallèles à l'axe x'x de défilement.

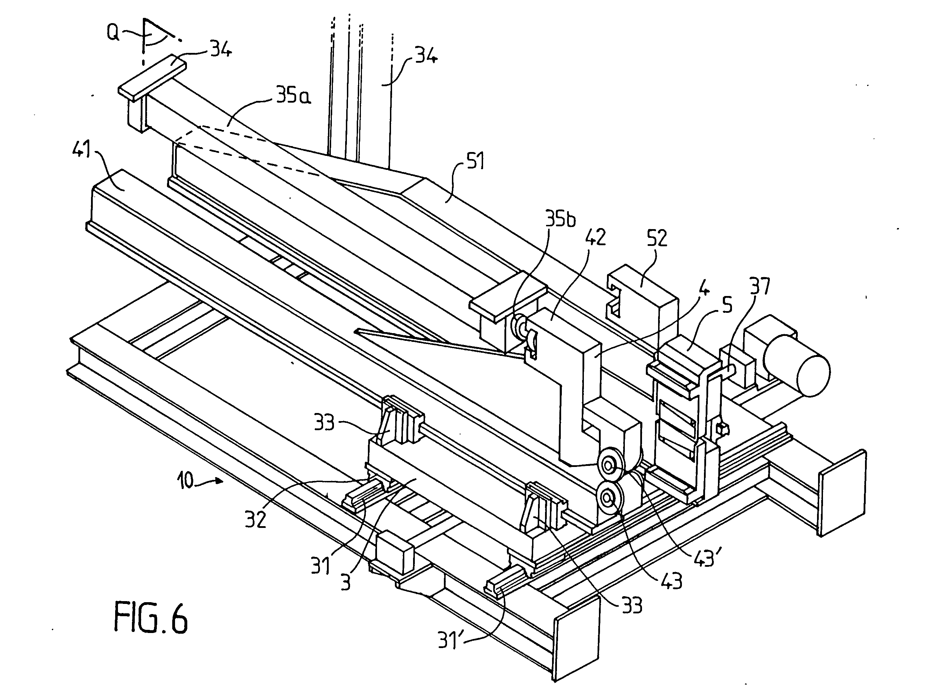

Le chariot porte-outils qui est représenté en perspective sur la figure 6, est constitué d'une plate-forme 3 portée par des patins 32 montés coulissants sur deux rails parallèles 31, 31' et sur laquelle sont ménagés plusieurs chemins 33 de guidage suivant une direction transversale, perpendiculaires à l'axe de défilement x'x et, par conséquent aux rails 31, 31'.

Sur les machines de ce type , on place généralement tous les organes moteurs et accessoires d'un même côté de la bande dit " côté entraînement " de façon à libérer l'autre côté dit " côté opérateur ". Le chariot porte-outils 3 sera donc, normalement, placé sur le côté entraînement.

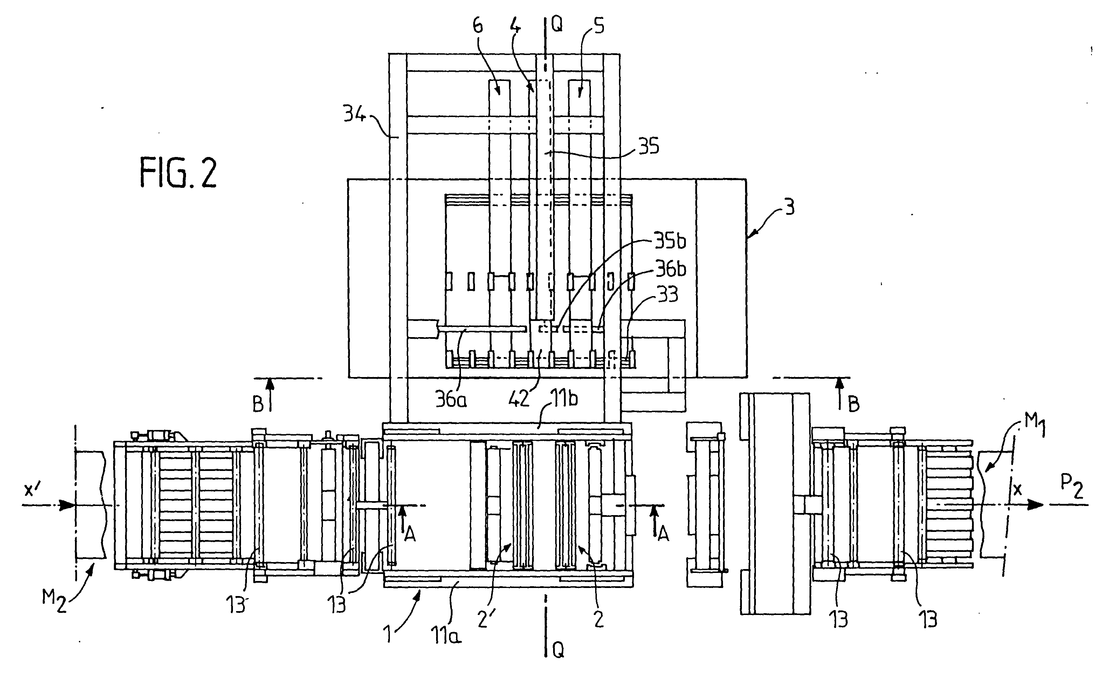

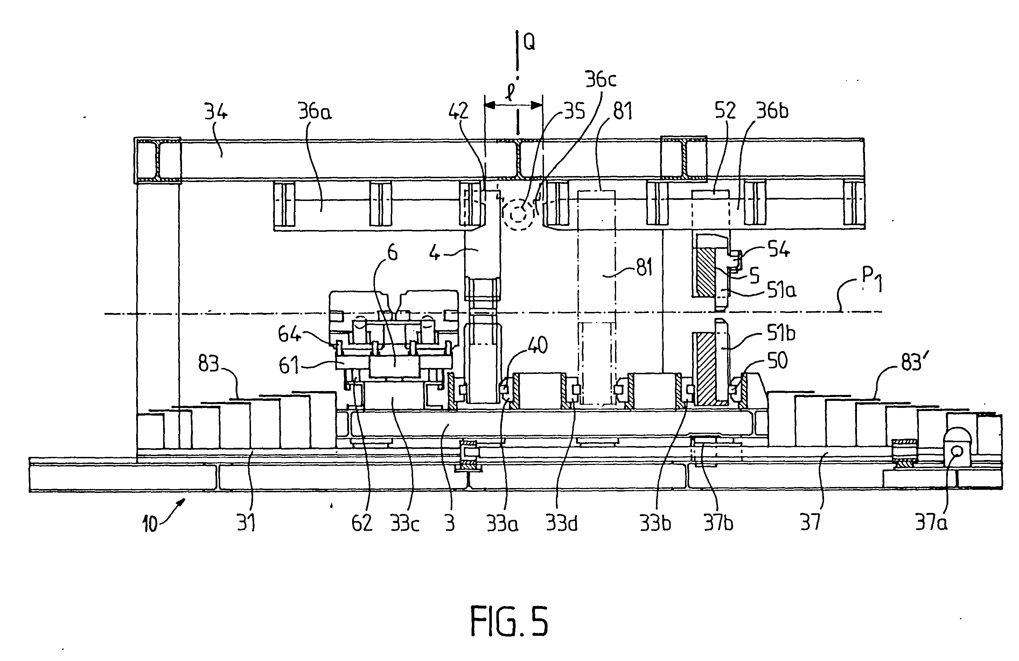

Comme indiqué sur la figure 5, qui est une vue en coupe suivant un plan B, B (figure 2), parallèle à la direction x'x, le chariot porte-outils 3 est muni, dans l'exemple représenté, de plusieurs chemins de guidage transversaux, respectivement un premier chemin 33a pour un outillage de cisaillage 4, un second chemin 33b pour un outillage d'aplanissement 5 et un troisième chemin 33c pour un outillage de changement 6 permettant l'entretien ou le remplacement des mors.

Eventuellement, un quatrième chemin 33d peut être prévu pour un outillage de soudage au défilé 81, par exemple une torche à laser utilisable pour des métaux inaptes au soudage par étincelage.

Il est à noter qu'une telle installation équipée à l'avance de deux moyens de soudage, respectivement par étincelage au moyen des mors et par laser ou plasma au moyen d'une torche déplaçable transversalement, permet d'adapter sans délai le mode de soudage à la nature du métal et, par conséquent de traiter en continu des bandes de métaux différents soudées bout à bout.

Chaque chemin de guidage transversal peut avantageusement être constitué de quatre patins en forme de mâchoires dans lesquelles coulissent des rails de guidage rectilignes fixés à la base de chaque châssis de support d'outillage. Ainsi, sur la figure 6 qui est une vue partielle, en perspective, du chariot porte-outils, on voit que l'outillage de coupe 4 est monté sur un châssis 41 s'étendant suivant une direction transversale à l'axe de défilement x'x et muni à sa base de deux rails rectilignes qui 40 coulissent dans les patins 33 formant le chemin de guidage transversal.

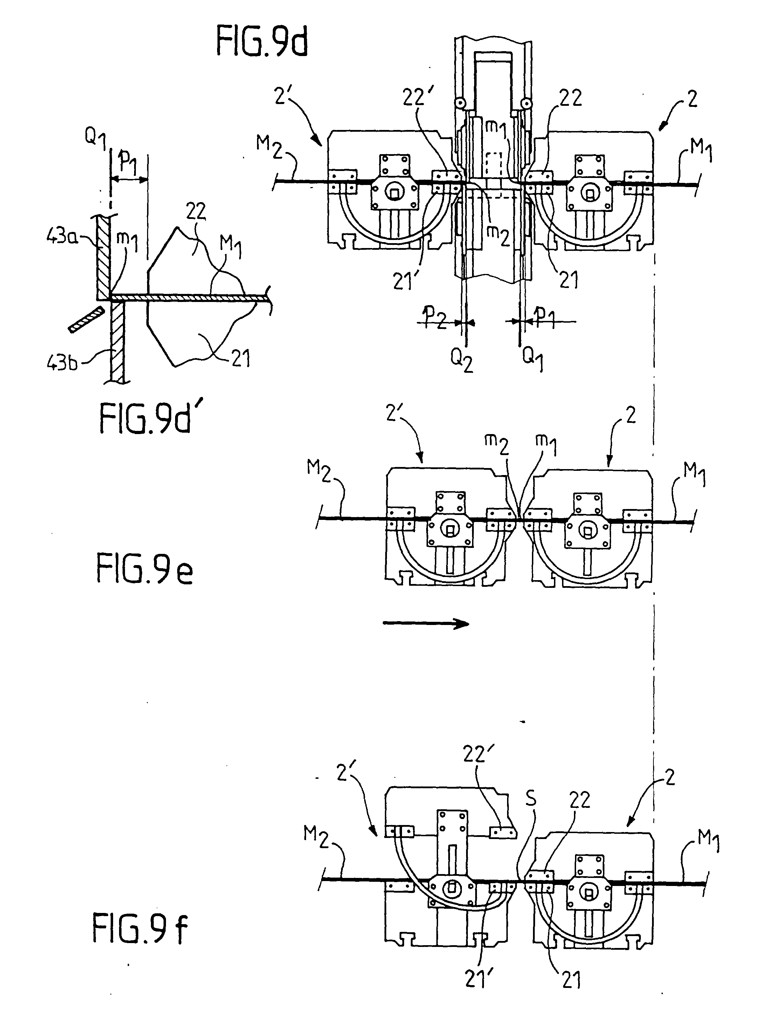

De préférence, comme l'indique la figure 9a, l'un des rails 40, par exemple celui de droite sur la figure présente un profil en queue d'aronde pour assurer un guidage latéral et l'autre rail 40' présente une section rectangulaire pour assurer le guidage vertical, les patins 33 ayant des profils conjugués.

Comme on l'a indiqué plus haut, il est nécessaire d'éliminer les bourrelets provoqués par la soudure et l'on utilise à cet effet un outillage d'aplanissement 5 monté sur un châssis 51 guidé sur le chemin de guidage correspondant 33b qui peut être constitué, de la même façon, par quatre patins dans lesquels coulissent deux rails rectilignes 50 fixés à la base du châssis 51 de support de l'outillage 5. Dans l'exemple représenté, cet outillage est une raboteuse.

Par ailleurs, le chariot 3 est associé à un moyen commun de déplacement transversal des outillages constitué d'un vérin 35 prenant appui, du côté opposé au bâti fixe 1, sur une charpente fixe 34 et centré sur un plan vertical Q perpendiculaire à l'axe de défilement x'x et définissant une position de travail moyenne.

La charpente fixe 34 forme avantageusement un portique qui enjambe l'ensemble du chariot 3 et des différents outillages portés par celui-ci.

Le vérin de manoeuvre 35 comprend un corps 35a fixé sur la charpente 34 et une tige dont l'extrémité 35b est élargie de façon à former une tête d'accrochage de l'un ou de l'autre des châssis de support d'outillage 41, 51 (Figure 6).

A cet effet, chaque châssis 41, 51 est muni, à sa partie supérieure d'une partie de guidage 42, 52 de profil conjugué à celui de la tête d'accrochage 35b, de façon à pouvoir s'engager sur celle-ci par coulissement longitudinal du chariot 3.

De préférence, comme le montre la figure 5, la charpente 34 est munie d'un rail supérieur 36 en deux parties, respectivement 36a, 36b, s'étendant suivant la direction longitudinale, respectivement de part et d'autre du vérin de manoeuvre 35 et ayant un profil identique à celui de la tête d'accrochage 35b. Entre les deux parties 36a, 36b du rail de guidage est placé un espace libre de largeur (1) supérieure à celle des châssis 41, 51 de support d'outillage.

Chaque châssis 41, 51 est donc maintenu à sa base par le chemin de guidage transversal correspondant 33a, 33b et, à sa partie supérieure, par la partie de guidage 42, 52 qui coulisse le long de la partie correspondante 36a, 36b du rail de guidage et vient s'engager sur la tête d'accrochage 35b du vérin de manoeuvre 35 lorsque le châssis de support d'outillage correspondant 41, 51 est placé, par déplacement longitudinal du chariot porte-outils 3, dans une position de travail centrée sensiblement sur le plan Q.

Dans cette position de travail, le vérin de manoeuvre 35, qui est à double effet, commande le déplacement du châssis de support d'outillage 41, 51, dans un sens ou dans l'autre, sur le chemin de guidage transversal correspondant 33a, 33b, pour la mise en oeuvre de l'outillage à l'intérieur du bâti 1, en passant par la fenêtre 16 ménagée sur-le montant 11b du bâti 1 placé du côté du chariot porte-outils.

On voit donc qu'un premier avantage de l'invention réside dans le fait que tous les outillages nécessaires à l'opération de raccordement sont regroupés sur un même chariot porte-outils, particulièrement compact, qui forme ainsi un magasin susceptible de se déplacer parallèlement à l'axe de guidage pour placer l'un ou l'autre des outillages dans une position de travail commune, selon l'ordre des opérations.

Le déplacement longitudinal du chariot porte-outils 3 sur ses rails 31 est commandé, dans l'exemple représenté, par une vis sans fin 37 centrée sur un axe parallèle à l'axe de défilement x'x, entraînée en rotation par un moteur 37a et engrenant dans un écrou 37b solidaire de la plate-forme du chariot porte-outils 3. L'écrou 37b est, de préférence, à circulation de billes de façon à réaliser un positionnement très précis du chariot 3 par rapport au bâti fixe 1.

Selon une autre caractéristique essentielle, l'outillage de coupe 4 effectue simultanément le cisaillage des deux extrémités, respectivement aval et amont des deux bandes M1 et M2 le long de deux plans de cisaillement Q1, Q2, écartés d'une distance constante d. Dans chaque plan, le cisaillage est effectué par deux lames opposées, respectivement supérieure 43a et inférieure 43b qui se rejoignent tangentiellement au niveau de la tôle à couper et sont placées de part et d'autre du plan de cisaillement Q1 (Q2).

Le châssis de support 41 comprend donc deux bras, respectivement supérieur 41a et inférieur 41b qui s'étendent de part et d'autre du plan de défilement P et sur lesquels sont montées deux paires de lames, respectivement supérieures 43a, 43'a et inférieures 43b, 43'b.

De préférence, les deux bras 41a, 41b sont reliés par une paroi 41c s'étendant suivant un plan médian passant entre les deux lames et qui forme une entretoise assurant la rigidité de l'ensemble.

Le cisaillage de la tôle peut ainsi être effectué par déplacement transversal du châssis 41 au moyen du vérin 35, soit par poussée, soit par traction. Cependant, pour effectuer le cisaillage correctement, il est préférable que les axes des lames, respectivement supérieures 43a et inférieur 43b, soient décalés dans le sens de cisaillement, d'une distance (e) dite "Offset".

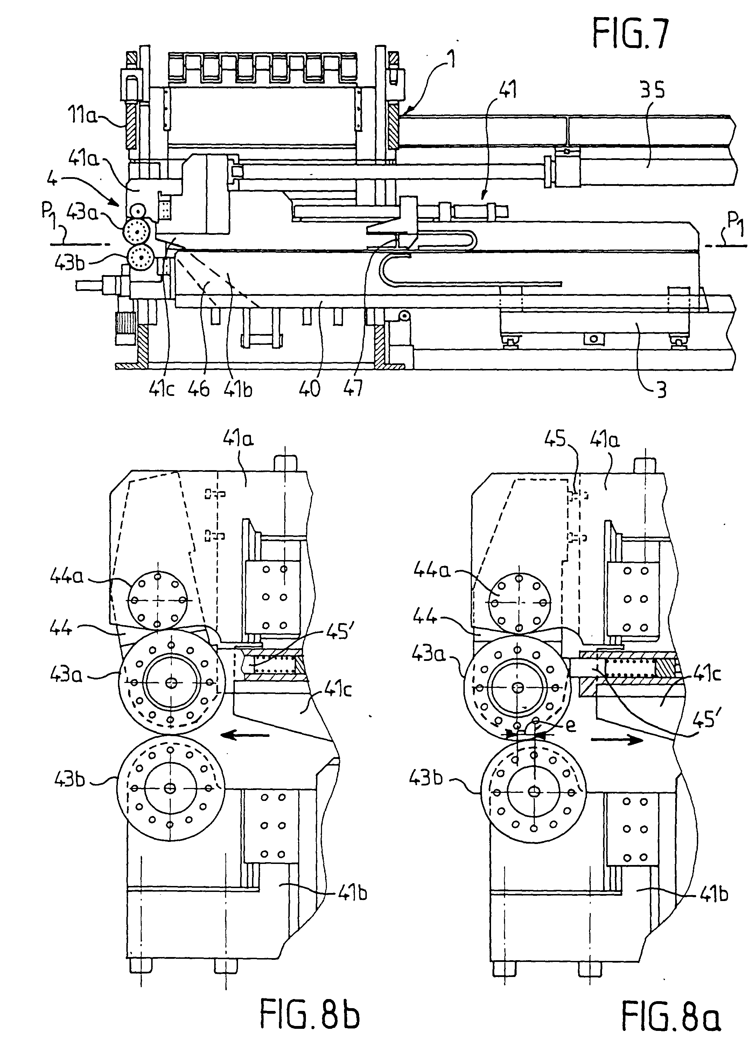

A cet effet, comme le montrent les figures 8a, 8b, les deux lames supérieures 43a, 43'a sont portées par un montant vertical 44 qui est monté pivotant autour d'un axe horizontal sur l'extrémité correspondante du bras supérieur 41a et est repoussé, à sa partie inférieure, par une butée élastique 45' actionnée par un ressort, de façon à venir s'appliquer contre une butée fixe 45 ménagée à l'extrémité du bras 41a et dont la position peut être réglée par des vis. Dans cette position, représentée sur la figure 8a, l'axe horizontal de rotation des deux lames supérieures 43a, 43'a est décalé, par rapport à l'axe de rotation des lames inférieures 43b, 43'b, d'une distance e qui peut être réglée en agissant sur la position de la butée 45.

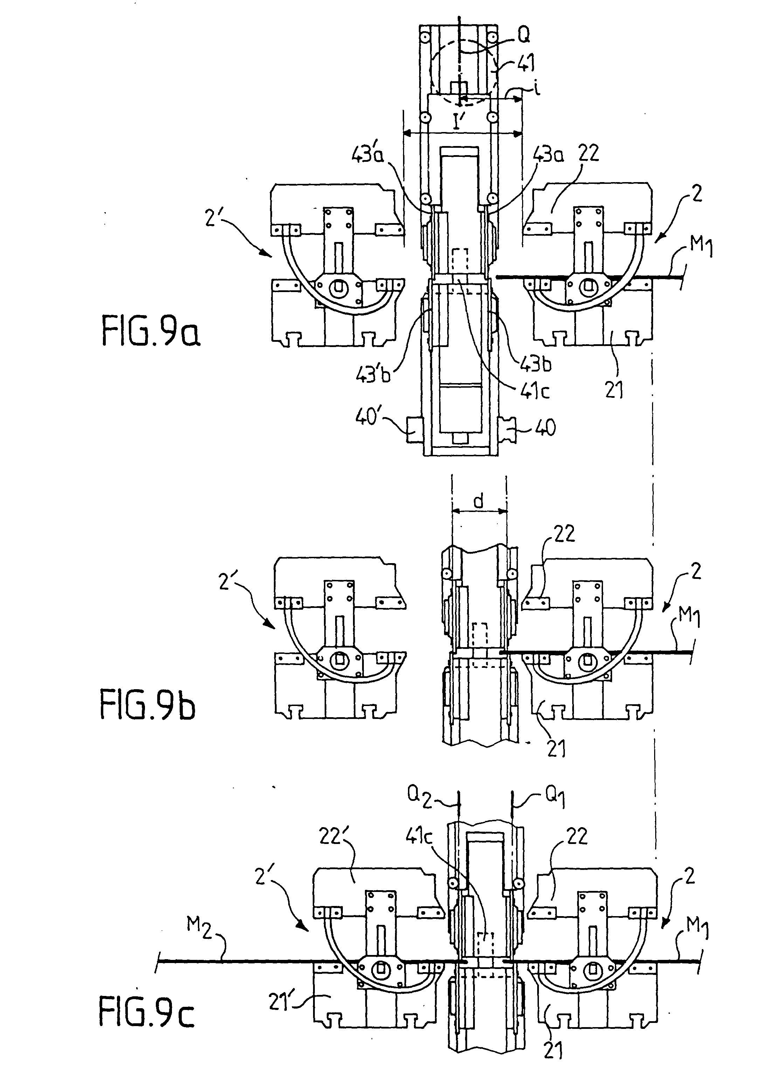

Les différentes opérations de cisaillage sont représentées schématiquement, en vue de face, sur les figures 9a, 9b, 9c.

La figure 9a représente la mise en place de la cisaille après le passage de la première bande M1 dont la partie arrière formant la queue, repose sur le mors inférieur 21 du premier organe de maintien 2, la position de la bande pouvant être grossièrement réglée par le bloc en S.

A ce stade, le bâti mobile 1' est reculé par rapport au bâti fixe 1 de telle sorte qu'il existe entre les plateaux des deux organes de maintien fixe 2 et mobile 2', un intervalle libre (I) suffisamment large pour permettre le passage du châssis 4 et des lames 43 en arrière de la queue de la première bande M1.

Sur les figures, on a représenté le plan moyen de travail Q sur lequel est centré le vérin de manoeuvre 35 représenté en pointillés, et qui est placé à une distance (i) de l'extrémité arrière des mors 21, 22 de l'organe de maintien fixe 2.

Les deux paires de lames de cisaillage 43, 43', qui définissent deux plans de cisaillement, respectivement avant Q1 et arrière Q2, écartés d'une distance constante (d), sont ainsi placées de l'autre côté de la bande M1, c'est-à-dire du côté opérateur de la machine, dans la position représentée sur la figure 7.

Le chariot 3 peut alors être rapproché du plateau fixe de maintien 2, dans la position indiquée sur la figure 9b. Le cas échéant, la paroi médiane 41c peut venir en butée sur la queue de la bande M1.

Au moyen des vérins 14, on avance ensuite le bâti mobile 1' avec l'organe de maintien mobile 2' dans la position indiquée sur la figure 9c pour laquelle l'extrémité avant des mors mobiles 21', 22' se trouve à proximité du châssis 4.

On introduit alors entre les deux mors 21', 22', la tête de la deuxième bande M2, dans une position qui peut être réglée par un organe pinceur associé au dispositif boucleur E2 de façon que son extrémité se trouve en avant du plan de cisaillement arrière Q2, l'avancement de la bande M2 étant, d'ailleurs, limité par l'entretoise 41c s'étendant entre les deux branches du châssis 41, dans le plan médian de celui-ci (Figure 9c).

De plus, les deux centreurs F1, F2 placés, respectivement, en amont et en aval de la soudeuse A permettent d'assurer l'alignement des deux bandes M1, M2 sensiblement sur le même axe x'x, au défaut de sabre près.

Les deux paires de mors des deux organes de maintien 2, 2' sont alors serrées sur les deux bandes M1, M2 qui peuvent ainsi être rapprochées l'une vers l'autre, leurs extrémités pouvant s'engager partiellement entre les axes des lames, respectivement supérieures et inférieures.

On peut donc avancer le chariot 3 vers le plateau fixe 2, dans la position indiquée sur la figure 9d, celui-ci s'effectuant par traction en ramenant le châssis porte-outils 4 sur le chariot 3, au moyen du vérin 35.

Pour corriger le défaut d'alignement, le châssis 41 de l'outillage de cisaillage porte un moyen de mesure, par exemple à cellules photo-électriques, qui peut se déplacer transversalement de façon à venir se placer au niveau des rives des deux bandes M1, M2 placées de part et d'autre de l'entretoise 41c, pour mesurer et comparer les positions relatives des rives des deux bandes. Le centreur amont F1 est muni, d'autre part de moyens de clampage de la queue de la première bande M1 et de déplacement transversal de celle-ci après clampage. De tels moyens, par exemple une pince et un système de déplacement à vis n'ont pas été représentés sur la figure 1.

Après serrage des mors mobiles 21', 22', sur la tête de la bande M2 et clampage de la queue de la bande M1 les positions relatives des rives sont comparées et, en fonction du résultat de la comparaison, la bande amont M1 est légèrement déplacée transversalement, de façon à centrer exactement l'axe de la queue de la bande M1 sur celui de la tête de la bande M2 serrée dans l'organe de maintien 2'. Le dispositif boucleur donne, en effet, une certaine latitude de déplacement transversale de la bande.

Ayant ainsi aligné parfaitement les deux bandes, on commande le serrage des mors fixes 21, 22 sur la queue de la première bande M1 qui, dès lors, est solidarisée avec le bâti fixe 1 qui, selon l'une des caractéristiques de l'invention, servira ensuite de référence pour toutes les opérations suivantes.

On peut alors avancer le chariot 3 vers le plateau fixe 2, dans la position indiquée sur la figure 9d, de façon à régler une distance de porte-à-faux déterminée p1 entre le premier plan de cisaillement Q1 et l'extrémité arrière des deux mors 21, 22 de l'organe de maintien fixe 2, comme le montre la figure 9d' qui est une vue de détail de la figure 9d. On notera que l'utilisation, pour le déplacement du chariot 3, d'une vis sans fin 37 associée à un écrou à circulation de billes permet de régler avec une grande précision la position du chariot et, par conséquent, des lames, et d'adapter ainsi exactement la distance de porte-à-faux à la nature du métal et à l'épaisseur de la bande pour réaliser l'opération de forgeage.

D'une façon analogue, les deux mors 21', 22' des plateaux mobiles 2' serrés sur la seconde bande M2 sont avancés au moyen des vérins 14 de déplacement du bâti mobile de façon à régler avec précision une distance de porte-à-faux déterminée p2 entre le second plan de cisaillement Q2 et l'extrémité avant des deux mors 21', 22'.

On notera que, le montage coulissant de la partie d'accrochage 42 par rapport à la tête 35b du vérin centrée sur le plan moyen de travail Q donne à l'outillage de cisaillement 4 une certaine latitude de déplacement pour le réglage précis du porte-à-faux.

De même, les mâchoires inférieures 23, 23' sont munies chacune d'une échancrure 17, 17' pour le passage des rails de guidage 40, du châssis 41, avec un jeu latéral suffisant pour permettre le réglage des porte-à-faux par déplacement du châssis 41 et du bâti mobile 1'.

Les deux paires de lames étant dans la position de la figure 9d, on procède au cisaillage des extrémités des deux bandes en ramenant le châssis porte-outils 4 sur le chariot 3, au moyen du vérin 35, le cisaillage s'effectuant par traction.

Comme indiqué sur la figure 8a, les lames supérieures 43a, 43'a sont décalées d'une distance e vers l'arrière par rapport aux lames inférieures 43b, 43'b, de façon à réaliser le cisaillement dans de bonnes conditions.

On réalise ainsi, sur la queue de la première bande M1 et la tête de la deuxième bande M2, deux bords cisaillés m1 et m2 écartés de la distance constante d et par conséquent, parfaitement parallèles.

Après retrait du châssis de cisaillement 4 sur le chariot 3, on avance le bâti mobile 1' vers le bâti fixe 1 de façon à mettre en contact les extrémités des deux bandes M1, M2 et l'on peut procéder au soudage en mettant sous tension les deux paires de mors qui servent d'électrodes et qui sont reliés à une source de courant électrique de la façon indiquée schématiquement sur la figure 4.

Il en résulte d'abord un chauffage, puis les vérins 14 de déplacement du bâti mobile déterminent l'impulsion de forgeage entre les extrémités en contact des deux tôles.

Comme on l'a indiqué schématiquement sur la figure 4, les deux organes de maintien, fixe 2 et mobile 2', sont avantageusement équipés de deux paires de volets mobiles 82, 82' montés pivotants, respectivement, sur les quatre mors 21, 22, 21', 22' et associés à des moyens 86 de commande du basculement desdits volets entre une position relevée et une position rabattue. De tels moyens, faciles à concevoir, n'ont pas été représentés en détail sur la figure. Les volets opposés 82, 82' sont légèrement décalés en hauteur et se recouvrent partiellement.

Pour permettre les réglages de position du bâti mobile, les volets sont relevés. Après serrage des mors, les volets sont rabattus de façon à limiter, de part et d'autre de la zone à souder un espace relativement confiné dans lequel est injecté un gaz neutre ou réducteur qui permet de limiter l'oxydation.

Après réalisation de la soudure, les volets 82 sont relevés et les mors mobiles 21', 22' sont ouverts, comme indiqué sur la figure 9f.

En revanche, dans le mode de réalisation représenté, les mors fixes 21, 22 restent serrés sur la queue de tôle M1 jusqu'à la fin de toutes les opérations. De ce fait, la bande unique constituée- par les deux bandes M1, M2 reliées par la soudure S reste fixe également.

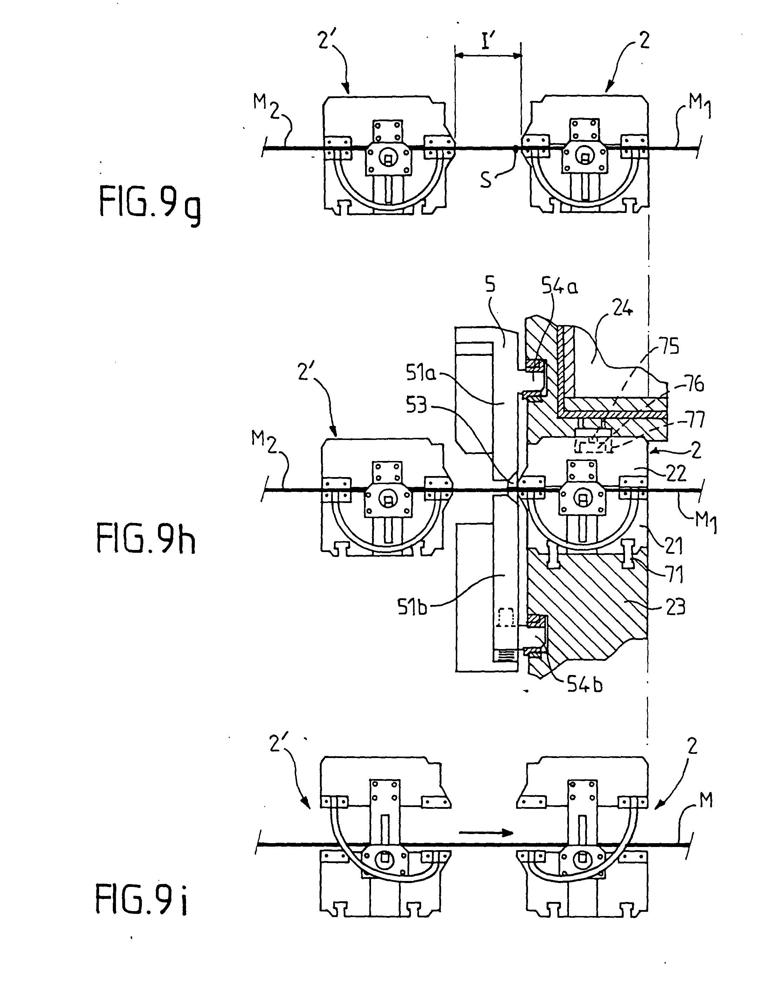

Les mors mobiles 21', 22' étant ainsi ouverts, le bâti mobile 1' est reculé de façon à laisser entre les deux organes de maintien, fixe 2 et mobile 2', un intervalle I', puis les mors mobiles 21', 22' sont resserrés sur la bande, comme indiqué sur la figure 9g.

L'intervalle I' est sensiblement constant et correspond à la largeur nécessaire pour le passage de l'organe de rabotage 5, de la façon représentée sur la figure 9h. Par exemple, une largeur de 200 à 250 mm peut être suffisante.

Après le rabotage, les deux organes de maintien, respectivement, fixe 2 et mobile 2', sont ouverts dans la position indiquée sur la figure 9i, et la bande unique M constituée par les deux bandes soudées M1 et M2 peut alors être entraînée vers la suite de l'installation de traitement.

L'organe de rabotage 5 est monté sur un châssis 51 et comporte de la façon habituelle, deux séries de pastilles de coupe 53 écartées d'une distance qui doit être réglée en fonction des épaisseurs des deux tôles de façon à éliminer complètement les bourrelets qui se forment, lors de la soudure, sur les deux faces de celles-ci.

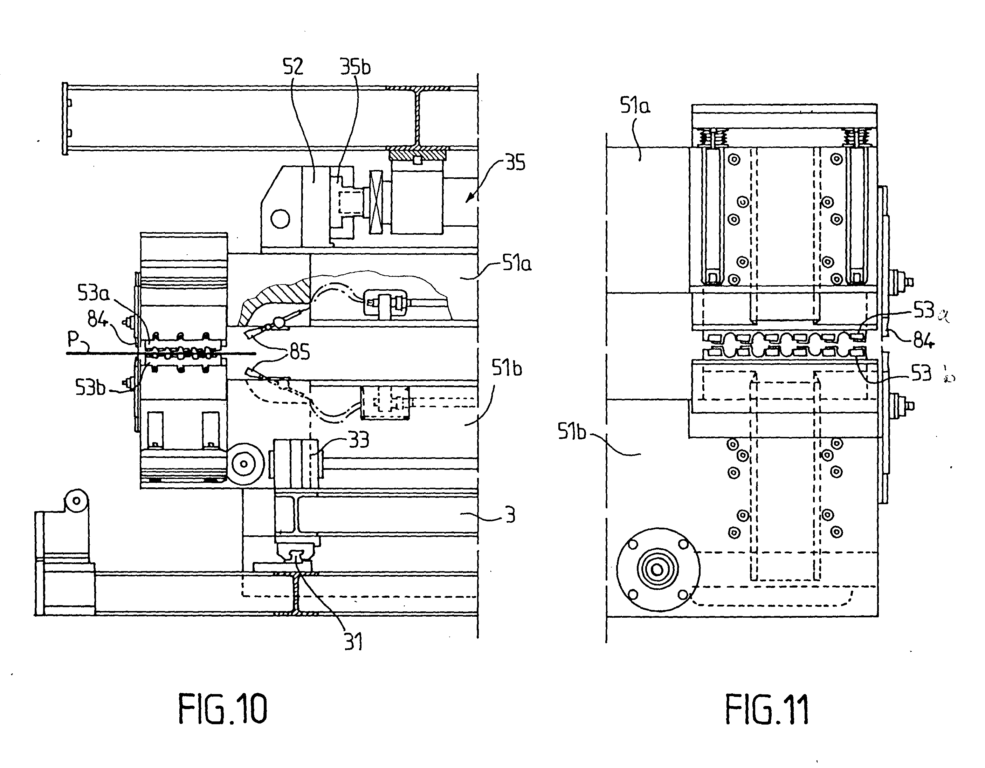

Comme le montrent les figures 10 à 12, le châssis 51 de support de l'outillage de rabotage comprend deux bras, respectivement supérieur 51a et inférieur 51b qui s'étendent respectivement au-dessus et en dessous du plan moyen P1 de défilement des bandes et portent, à leurs extrémités, deux ensembles de pastilles de rabotage respectivement supérieures 53a et inférieures 53b pour réaliser le rabotage des deux faces de la soudure.

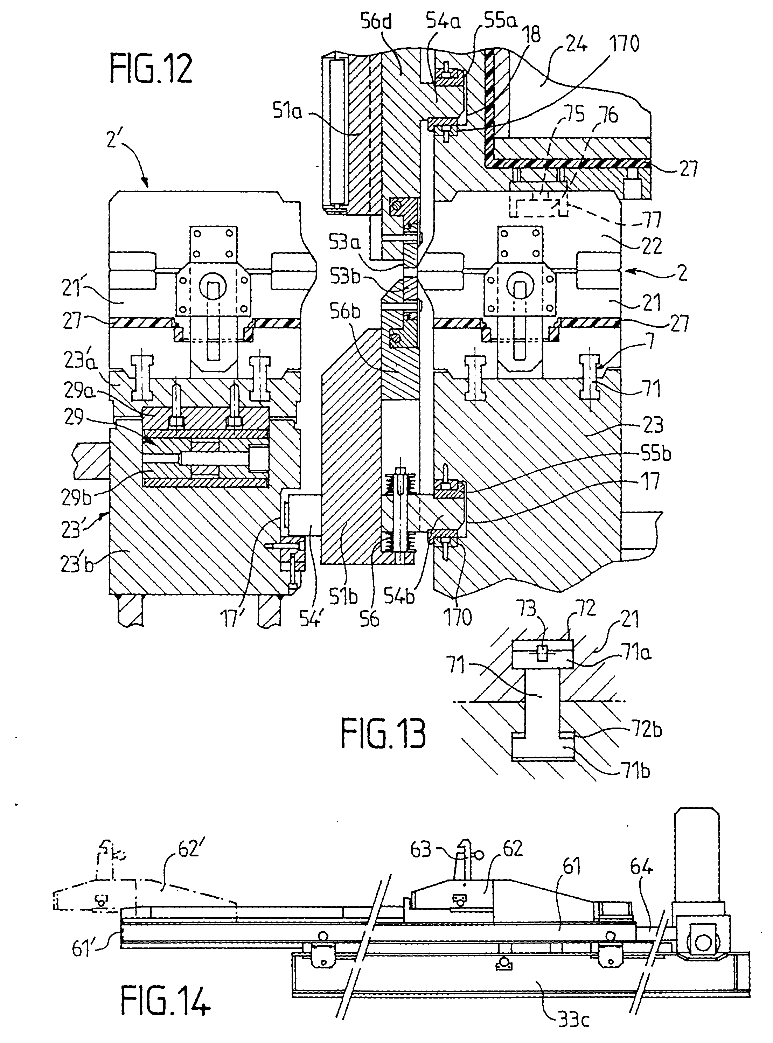

De préférence, chaque ensemble de pastilles 53a, 53b est porté par un cadre de support 56a, 56b monté sur le bras correspondant 51a, 51b avec une possibilité de jeu vertical permettant les ajustements. A cet effet, selon un mode de réalisation particulièrement avantageux représenté sur la figure 12, chaque cadre de support 56a, 56b d'un ensemble de rabotage 53a, 53b, est muni d'une pièce de guidage 54a, 54b s'étendant en saillie vers le bâti fixe.

La pièce de guidage 54a du cadre de support supérieur 56a pénètre dans une échancrure 18 de la mâchoire supérieure fixe 21 au cours de l'avancement du châssis 51 en prenant appui, par l'intermédiaire d'une glissière 55a, sur une garniture de frottement 170 ménagée le long de l'échancrure 18. De la sorte, l'échancrure 18 forme une rainure de guidage horizontal de l'ensemble de rabotage 53a.

D'une façon analogue, le cadre de support inférieur 56b est muni d'une pièce de guidage 54b qui est placée dans le prolongement du rail de guidage 50 du châssis 51 et peut pénétrer, au cours de l'avancement du châssis, dans une échancrure 17 ménagée sur la mâchoire inférieure fixe 53 et munie d'une garniture de frottement 170 sur laquelle peut glisser la partie de guidage 54b.

De la sorte, les deux cadres 56a, 56b de support, respectivement, des ensembles de rabotage supérieur 53a et inférieur 53b sont guidés horizontalement sur deux rainures de glissement dont le niveau est fixé par les deux mâchoires de l'organe de maintien fixe 2. L'écartement des pastilles de rabotage s'ajuste donc automatiquement à l'épaisseur de la bande soudée correspondant à l'espacement des deux mâchoires.

D'ailleurs, la bande soudée repose, normalement, sur un plan de défilement de niveau constant et, il pourrait donc être suffisant de guider seulement l'outil de rabotage supérieur 53a pour ajuster l'écartement. Il est préférable cependant, de guider également le cadre de support inférieur 56b. En outre, celui-ci peut être muni, du côté du bâti mobile 1', d'un ou deux galets rotatifs 54' placés dans le prolongement du rail de guidage correspondant 50 et susceptibles de s'engager dans une rainure 17' de la mâchoire mobile 23' pour éviter un basculement du châssis 51 pendant le rabotage de la soudure.

Cependant, pour éviter un guidage hyperstatique du châssis 51, la pièce de guidage 54a de l'ensemble de rabotage inférieur 53a est reliée au bras inférieur 51a par une liaison élastique 56, prenant appui, par exemple, sur des rondelles Belleville, ce qui donne une certaine possibilité de jeu vertical à l'ensemble de rabotage au moment de l'engagement de celui-ci sur la soudure, le niveau étant fixé, comme on l'a vu, par la mâchoire supérieure 24.

Grâce à ces dispositions, le guidage des deux ensembles de rabotage 53a, 53b sur les mâchoires fixes 24, 23 permet de garantir l'écartement des outils de coupe 53 et leur positionnement par rapport à chaque face de la tôle quelle que soit l'épaisseur de celle-ci.

Dans le mode de réalisation représenté sur la figure 12, ce guidage est assuré non seulement verticalement mais aussi latéralement, chaque pièce de guidage 54a, 54b étant munie de parties d'accrochage latéral coopérant avec des parties conjuguées de la rainure correspondante 18, 17 pour assurer le maintien latéral et vertical de l'outil.

Dans ce cas, la position de travail des deux ensembles de rabotage 53a, 53b est fixée par rapport au bâti fixe 1 et, la largeur des pastilles 53 doit être déterminée pour couvrir la soudure quelle que soit la distance de porte-à-faux choisie.

Comme le montrent les figures 9d à 9f les deux mors 21, 22 de l'organe de maintien 2 du bâti fixe 1 peuvent être maintenus serrés sur la première bande M1, à partir de l'étape de cisaillement 9d. Dans l'étape suivante de soudage 9e, par déplacement du bâti mobile 1', la tête m2 de la bande suivante M2, qui est serrée entre les mors de l'organe de maintien mobile 2' est mise au contact de la queue m1 de la première bande M1 et la soudure par étincelage se produit, le bâti mobile 1' continuant à avancer pour réaliser le forgeage.

Les deux bandes M1 et M2 constituent alors une bande unique dont la position est fixée par les mors 21, 22 du bâti fixe 1 qui restent serrés. Après avoir ouvert les mors mobiles 2' (étape 9f) on recule le bâti mobile de la distance I' nécessaire au passage de l'organe de rabotage, on resserre les mors mobiles 2' et, la bande étant alors parfaitement maintenue, on peut procéder au rabotage des bourrelets.

En raison du forgeage, à la fin de l'étape 9e, la soudure se trouve très près des mors fixes 21, 22 et c'est pourquoi, dans le mode de réalisation représenté sur les figures, l'organe de rabotage 5 est guidé par coulissement sur les mâchoires du bâti fixe 1.

C'est pourquoi, comme on l'a indiqué précédemment, les pastilles de rabotage doivent avoir une largeur assez grande pour couvrir la soudure dans tous les cas.

Etant donné que la position exacte de la soudure par rapport aux mors fixes 21, 22 dépend des caractéristiques des bandes et des conditions de soudage et de forgeage, la ligne soudée risque de se trouver décalée latéralement d'un côté ou de l'autre du plan médian de l'outil de rabotage si la position relative de celui-ci est déterminée à l'avance par rapport aux mors fixes.

De plus, pour permettre, par la suite, le laminage de la bande soudée, les bourrelets doivent être totalement éliminés et l'on préfère même que la soudure soit légèrement creusée, les outils de rabotage ayant une face de travail légèrement convexe.

De ce fait, si la largeur de l'outil de rabotage est trop grande, la profondeur d'usinage peut être excessive et il existe un risque de déchirure, notamment si les deux bandes soudées n'ont pas la même épaisseur.

Il peut donc être préférable de réduire la largeur des outils de rabotage qui doivent donc être bien centrés sur la ligne soudée. Mais il faut alors écarter légèrement la ligne soudée des mors fixes pour permettre le centrage de celle-ci sur le plan moyen de l'organe de rabotage.

Pour cela, après l'étape de soudure et de forgeage 9e, on ne procède pas exactement de la façon exposée précédemment en référence à la figure 9f. Dans ce cas, en effet, les mors 2 du bâti fixe 1 sont d'abord ouverts et les deux bandes M1, M2 soudées entre elles sont légèrement reculées de façon à placer la soudure à une certaine distance des mors fixes 2 correspondant à une position déterminée du plan médian de l'outil de rabotage.

Cette distance, qui est mesurée par rapport au bâti fixe 1 peut être déterminée de façon très précise grâce aux moyens de réglage de la position du bâti mobile 1'.

Les mors 21', 22' sont alors ouverts pour permettre le recul du bâti mobile 1' de la distance nécessaire au passage de l'organe de rabotage 5 lorsque celui-ci est centré sur le plan fixe indiqué précédemment et dont la position est déterminée à l'avance pour être valable dans tous les cas et pour toutes les bandes à souder.

Il est à noter que les moyens de réglage fin 37b de la position longitudinale du chariot porte-outils 3, permettent de positionner de façon très précise le châssis 51 de l'organe de rabotage 5 par rapport au bâti fixe 1 de façon que les pastilles 53a, 53b soient parfaitement centrées sur ce plan fixe de rabotage dans lequel a été placée la ligne soudée.

Les mors mobiles 21', 22' sont alors resserrés sur la bande (étape 9g) et, la bande unique M1, M2 étant parfaitement maintenue, on peut procéder au rabotage d'une façon analogue à celle qui est indiquée sur la figure 9h, les outils de rabotage 53a, 53b étant, cependant, légèrement écartés des mors fixes 21, 22, de la distance indiquée précédemment.

On voit que, grâce aux dispositions selon l'invention, le bâti fixe 1 sert, dans les deux cas, de référence unique de positionnement, successivement, pour le cisaillage, pour la soudure et pour le rabotage, les différents outillages étant amenés l'un après l'autre dans la position de travail commune par simple déplacement du châssis porte-outils 3.

Ce dernier est donc utilisé comme une sorte de magasin qui peut, d'ailleurs, porter d'autres outillages comme, par exemple, un outillage de remplacement 6 représenté schématiquement, en coupe transversale sur la figure 5 et en élévation sur la figure 14.

Cet outillage de remplacement 6 est monté sur un châssis de support 61 qui peut coulisser le long d'un chemin de guidage transversal 33c ménagé sur le chariot 3, par exemple à côté du chemin de guidage transversal 33a de l'outillage de cisaillement 4.

Comme indiqué sur la figure 12 et, plus en détail, sur la figure 13, le mors inférieur 21 de l'organe de maintien fixe 2 est fixé sur la mâchoire inférieure 23 solidaire du bâti fixe 1, par l'intermédiaire d'un système de clampage 7 comprenant deux lardons 71 à section en double T. La partie supérieure de chaque lardon 71, qui a une section en T, peut s'engager dans une rainure 72 de profil conjugué, ménagée sur la face inférieure du mors inférieur 21, la rainure 72 ayant une hauteur supérieure à celle de la partie en T du lardon 71, de façon à ménager un léger jeu vertical.

De façon analogue, la partie inférieure 71b du lardon 71 est élargie en forme de T renversé et est logée dans un évidement transversal 72b ménagé dans la mâchoire inférieure 23 et de hauteur un peu supérieure à celle de la partie élargie 71b qui forme le piston d'un vérin à double effet, les deux chambres ainsi ménagées au-dessus et en dessous du piston 71b pouvant être alimentées en fluide. De plus, des galets de roulement 73 à axe horizontal et parallèle au plan P2, sont montés sur la partie externe 71a du lardon 71 et dépassent légèrement au-dessus de la face supérieure de celui-ci de façon à venir en appui sur le fond de la rainure 72 par soulèvement du lardon 71. Dans cette position, le mors inférieur 21 qui repose sur les galets 73 est décollé de la mâchoire inférieure 23 et peut être retiré par déplacement transversal en roulant sur les galets 73, les lardons 71 servant au guidage transversal dudit mors inférieur 21. En revanche, si le vérin constitué par le lardon 71 est alimenté dans l'autre sens, la partie supérieure externe 71a du lardon 71 assure le clampage du mors inférieur 21 contre la mâchoire inférieure 23 et la solidarisation des deux pièces.

Par conséquent, les lardons 71 en double T servent à la fois d'organes de clampage et d'organes de roulement et de guidage du mors inférieur 21 pour le démontage de ce dernier.

Le mors supérieur 22 est également fixé de façon amovible sur la mâchoire supérieure 24 par un système de fixation à baïonnette comprenant au moins deux vérins de clampage 75 ayant chacun un piston monté dans la mâchoire 24 et actionnant une tige verticale qui peut à la fois se déplacer verticalement et tourner autour de son axe. L'extrémité inférieure de la tige est munie de deux parties alignées 76 formant des crochets qui sont susceptibles de s'engager dans une cavité 77 ménagée dans le mors supérieur 22, en passant par un trou oblong de forme correspondante. De la sorte, lorsque les crochets 76 sont alignés dans l'axe du trou oblong, il peuvent pénétrer, sous l'action du piston, dans la cavité 77. On fait alors tourner la tige d'un quart de tour et, en actionnant le vérin 75, on soulève les crochets 76 qui, dans une position haute du piston, se bloquent contre le fond de la cavité 77 en assurant le clampage du mors 22 contre la mâchoire supérieure 24.

Inversement, le mors supérieur 22 peut être abaissé au moyen des vérins 75 pour venir reposer sur le mors inférieur 21. Après rotation inverse d'un quart de tour les crochets 76 sont remontés pour détacher le mors 22 de la mâchoire supérieure 24.

L'ensemble des deux mors 21, 22 est soulevé par les lardons 71 et peut alors être retiré de la machine en roulant sur les galets 73.

Dans un mode de réalisation préférentiel représenté sur la figure 14, le châssis de support 61 de l'outillage de remplacement 6 est constitué d'une table horizontale guidée par des galets sur des profilés fixés sur le chariot 3 et formant un chemin de guidage 33c. La table 61 peut ainsi se déplacer transversalement entre une position reculée pour laquelle l'ensemble de la table 61 est entièrement supporté par le chariot 3 et une position avancée, représentée sur la figure 13, pour laquelle la table 61 s'étend en porte-à-faux à partir du chariot 3, du côté opérateur, de façon à venir à proximité des organes de maintien, respectivement fixe 2 et mobile 2'.

Pour retirer les deux mors 21, 22, on utilise un chariot d'accrochage 62 muni d'un crochet amovible 63 et qui peut coulisser transversalement sur la table 61 le long de rails et sous l'action d'un moyen de commande non représenté en détail, par exemple une chaîne entraînée par un moteur.

Par ailleurs, le chariot 62 est relié à la table 61 par un système à clipsage non représenté permettant au chariot 62 d'entraîner la table 61 dans son déplacement transversal, mais de s'en détacher lorsque la table est bloquée, par exemple par un jeu de cames.

Lorsque les mors doivent être démontés, pour entretien ou remplacement, un déplacement longitudinal du chariot 3 sous l'action de la vis 37 amène l'organe de remplacement 6 dans la position de travail centrée sur le plan de travail Q. Les deux mors 21, 22 de l'organe de maintien sont désolidarisés des mâchoires respectives de la façon indiquée plus haut et reposent sur les lardons 71.

On commande alors l'avancement du chariot de démontage 62 qui, dans cette position, entraîne avec lui la table 61. Celle-ci roule sur le chemin de guidage 33c et s'avance en porte-à-faux d'une certaine longueur, par exemple un mètre environ, pour se trouver dans la position de la figure 14 pour laquelle son extrémité antérieure 61' se trouve à proximité du bâti de la machine. Des butées ou cames non représentées arrêtent, dans cette position, le mouvement de la table 61. Le chariot 62 se détache alors de la table et continue seul son mouvement d'avancement en roulant sur la table 61 maintenue en porte-à-faux sur le chariot 3 par les rails 33c.

A l'extrémité de la table 61, le chariot de démontage se trouve dans la position 62' représentée en pointillés et l'organe d'accrochage 63 est basculé pour s'accrocher sur une partie correspondante de la mâchoire inférieure 21.

La table 61 est d'autre part munie de rails de support et de guidage 64 qui sont placés chacun dans le prolongement de l'un des lardons 71 de clampage de la mâchoire inférieure.

Etant donné que l'organe de maintien mobile 2' est monté sur le bâti mobile 1' d'une façon tout-à-fait identique à celle qui a été décrite pour l'organe de maintien fixe 2, la table 61 sera munie, normalement, de deux paires de rails 64 placés respectivement dans le prolongement des deux paires de lardons 71 fixés sur les mâchoires 23, 23'. Ces rails 64 peuvent être de simples profilés traités sur lesquels s'engagent, par coulissement, les évidements correspondant 72 des mors inférieurs 21, 21'.

Lorsque l'on ramène en arrière le chariot 62, celui-ci fait passer les mors sur la table 61 qui est maintenue bloquée par rapport au chariot 3 par un jeu de cames. A la fin de sa course, le chariot vient en butée sur la table 61 qui est alors entraînée avec le chariot 62 et les mors démontés, l'ensemble étant ramené sur le chariot de support 3.

On voit donc que l'invention permet de simplifier considérablement l'ensemble des opérations nécessaires au soudage de deux bandes. L'installation utilisée est, en effet, particulièrement compacte, et son fonctionnement peut être contrôlé facilement et avec une grande précision, tous les mouvements étant guidés par rapport au bâti fixe 1 qui sert de référence fixe pour chacune des opérations.

Mais l'invention ne se limite évidemment pas aux détails des modes de réalisation qui viennent d'être décrits, et peuvent faire l'objet de perfectionnements ou de variantes sans s'écarter du cadre de protection défini par les revendications.

Par exemple, en cas de variation d'épaisseur, il est intéressant de régler le niveau de la deuxième bande par rapport à la première, de façon à répartir la différence de niveau sur les deux faces, en maintenant l'alignement des plans moyens horizontaux.

A cet effet, comme le montre la figure 12, la mâchoire mobile 23' comprend avantageusement une partie supérieure 23'a de niveau réglable sur laquelle sont montés les lardons 71' de fixation du mors inférieur mobile 21', et qui est constituée d'une plaque prenant appui sur la partie inférieure 23'b, de niveau constant, par l'intermédiaire d'un organe 29 d'épaisseur réglable, par exemple un coin ayant au moins deux parties 29'a, 29'b séparées par une face inclinée et interposé entre les deux parties 23'b, 23'a de la mâchoire mobile 23'. Le déplacement du coin permet de régler, en hauteur, avec précision, le niveau de la partie réglable 23'a et, par conséquent, du mors inférieur 21' par rapport à la partie inférieure 23'b.

On voit également sur la figure 12, que chaque mors inférieur 21, 21', est constitué de deux parties superposées, respectivement une partie inférieure d'appui sur la mâchoire inférieure 23, 23' et une partie supérieure de contact avec la bande, sur laquelle est ménagé le mors proprement dit. Les deux parties sont séparées par une couche d'isolant électrique 27.

De même, une couche isolante 27 est interposée entre chaque mors supérieur 22, 22' et la mâchoire supérieure correspondante.

De la sorte, comme on l'a indiqué schématiquement sur la figure 4, seuls les mors, qui servent d'électrodes, sont alimentés électriquement, les conducteurs 80, 80', relié directement aux mors supérieurs 22, 22' étant également isolés.

Le cheminement du circuit électrique de puissance peut avantageusement être conçu de manière à engendrer une puissance réactive consommée la plus faible possible.

Par ailleurs, du fait que, toutes les opérations nécessaires à la soudure sont réalisées dans une zone limitée, entre le bâti mobile 1' et le bâti fixe 1 qui sert de référence, il est possible de concentrer à cet endroit tous les moyens d'évacuation des polluants ou déchets de soudure.

Par exemple, le châssis 41 de l'outillage de cisaillement 4 est avantageusement muni d'un canal 46 s'ouvrant en arrière des lames 43 et débouchant au dessous du châssis pour évacuer les chutes de cisaillement, au fur et à mesure de leur formation, vers un dispositif de récupération ménagé dans le massif de fondation 10, au dessous du bâti fixe 1.

Etant donné que le rabotage et la coupe sont réalisés sensiblement dans la même position par rapport au bâti fixe, les déchets de soudure tels que scories et copeaux de rabotage peuvent être évacués au même endroit.

A cet effet, comme le montre la figure 10, les deux outils de rabotage 53a, 53b, sont munis, sur leur face avant, d'un système de brossage 84 tel que des lamelles en acier inoxydable qui, lors du déplacement transversal du châssis 51 frottent sur les extrémités des mors pour enlever les scories dues aux étincelles électriques.

Par ailleurs, deux rampes de soufflage 85 sont montées sur les deux bras 51a, 51b du châssis 51, en arrière des outils de rabotage 53a, 53b, pour évacuer les copeaux au fur et à mesure de leur formation.

De la sorte, les outils de rabotage sont nettoyés avant de revenir sur le chariot porte-outils 3 et l'on évite le dépôt sur les rails 31 ou les chemins de guidage de particules telles que des copeaux ou des scories qui auraient pu gêner le déplacement du chariot 3 et des outillages.

De plus, pour faciliter la maintenance et garantir la propreté des rails, le chariot 3 est avantageusement associé à deux ensembles de capots télescopiques 83, 83' qui s'étendent à partir du chariot 3, vers l'amont et vers l'aval, comme indiqué schématiquement sur la figure 5.

Chaque ensemble télescopique 83 représenté également sur la figure 1, est constitué d'une série de capots enfilés les uns dans les autres et recouvrant l'ensemble du système de déplacement et de guidage du chariot 3, notamment les rails 31 et la vis 37. Les éléments d'extrémité de chaque ensemble de capots 83, 83' sont fixés respectivement, sur le côté correspondant du chariot 3 et sur l'extrémité du chemin de guidage de telle sorte que celui-ci soit recouvert en permanence par les capots ou le chariot 3, chaque ensemble se dépliant ou se repliant selon la position du chariot 3.

Il faut également noter que, s'il est particulièrement avantageux d'utiliser, pour la coupe des deux bords à souder, une cisaille double déplaçable transversalement, il serait possible, également, d'utiliser une cisaille fixe, à guillotine, placée à l'intérieur du bâti, la soudure étant effectuée par déplacement transversal d'une torche de soudage montée sur un châssis déplaçable transversalement du chariot porte-outils 3.

D'une façon générale, en effet, grâce à l'utilisation d'un chariot porte-outils permettant de placer successivement en position de travail divers outillages, l'invention permet d'adapter facilement la machine aux besoins et, en particulier, d'améliorer les performances d'une installation existante.

Les signes de référence insérés après les caractéristiques techniques mentionnées dans les revendications ont pour seul but de faciliter la compréhension de ces dernières et n'en limitent aucunement la portée.

## Revendications

1. Machine de raccordement de bandes métalliques défilant successivement le long d'un plan moyen (P1) sensiblement horizontal et suivant un axe longitudinal de défilement (x'x), comprenant :
- un bâti fixe (1) centré sur l'axe de défilement (x'x) et sur lequel est monté un premier organe de maintien (2) à deux mors (21, 22) pour le serrage de l'extrémité aval, dans le sens de défilement, d'une première bande (M1),
- un bâti mobile (1') centré sur l'axe de défilement (x'x) et déplaçable parallèlement à celui-ci par rapport au bâti fixe (1), ledit bâti mobile (1') portant un second organe de maintien (2') à deux mors pour le serrage de l'extrémité amont d'une seconde bande (M2) suivant la première bande (M1) et,
- au moins trois outillages pour le raccordement de la seconde bande (M2) à la première bande (M1), respectivement,
- un outillage de coupe (4) comprenant deux organes (43, 43') de cisaillage simultané de deux bords parallèles en vis à vis, respectivement aval (m1) et amont (m2), sur les extrémités des deux bandes (M1, M2), après serrage de celles-ci respectivement dans le premier et le second organes de maintien (2, 2'), le cisaillage de chaque bord étant effectué à une distance déterminée en porte-à-faux (p1, p2) par rapport aux mors de serrage correspondants (21, 22) (21',22'),
- un outillage (8) de soudure des deux bandes (M1, M2) bord à bord après rapprochement de celles-ci par déplacement du bâti mobile (1'),
- un outillage d'aplanissement (5) de la soudure par enlèvement de matière excédante sur les deux faces des bandes soudées (M1, M2),
**caractérisée par le fait qu'**elle comprend :
- un chariot porte-outils (3) monté coulissant sur un chemin de guidage longitudinal (31) s'étendant sur un premier côté des deux bâtis, parallèlement à la direction de défilement (x'x),
- au moins deux chemins de guidage transversal (33a, 33b) ménagés l'un à côté de l'autre sur le chariot porte-outils (3) et perpendiculaires à la direction de défilement (x'x),
- au moins deux châssis de support (41, 51), chacun, de l'un des outillages de raccordement, lesdits châssis de support (41, 51) étant montés coulissants, respectivement, chacun sur l'un desdits chemins (33a, 33b) de guidage transversal,
- des moyens (37) de commande du coulissement du chariot porte-outils (3) le long du chemin de guidage longitudinal (31), pour le positionnement de l'un ou l'autre desdits chemins (33a, 33b) de guidage transversal, sensiblement dans une même position de travail commune, centrée sur un plan moyen (Q) orthogonal à l'axe de défilement.
- des moyens (35), de commande du coulissement transversal, l'un après l'autre, de chacun desdits châssis (41, 51) de support d'outillage sur le chemin de guidage transversal correspondant (33a, 33b), après mise en place dudit chemin dans ladite position de travail commune, pour la mise en oeuvre de l'outillage (4, 5) porté par ledit châssis (41, 51) et la réalisation de l'opération correspondante, parallèlement à un même plan moyen de travail (Q), sur les bords en vis à vis, respectivement aval (m1) et amont (m2), des deux bandes (M1, M2).

2. Machine de raccordement selon la revendication 1, **caractérisée par le fait que** les moyens de commande du coulissement transversal des châssis (41, 51) de support d'outillage sont constitués d'un moyen commun (35) disposé au niveau de la position de travail commune et déplaçable perpendiculairement à la direction de défilement en prenant appui sur une charpente fixe (34), ledit moyen commun (35) étant muni d'un organe de saisie (35b) susceptible de s'engager de façon amovible sur une partie conjuguée correspondante (42, 52) de chaque châssis (41, 51) de support d'outillage lorsque ledit châssis (41, 51) se trouve dans la position de travail commune.

3. Machine de raccordement selon l'une des revendications 1 et 2, **caractérisée par le fait que** le chariot porte-outils (3) est monté déplaçable sur un chemin de coulissement longitudinal inférieur (31) ménagé sur un plancher (10) à côté de la machine (A) et associé à un chemin parallèle (36) de coulissement supérieur, ménagé sur une charpente de support (34) et sur lequel s'engage par coulissement une partie de guidage correspondante (42, 52), de forme conjuguée, ménagée sur chaque châssis de support d'outillage (41, 51), ledit chemin longitudinal supérieur (36) comprenant deux parties (36a, 36b) s'étendant respectivement de part et d'autre d'une interruption placée au niveau de la position de travail commune et de largeur (1) suffisante pour permettre le déplacement transversal de l'un ou l'autre desdits châssis (41, 51) de support d'outillage.

4. Machine de raccordement selon la revendication 3, **caractérisée par le fait qu'**elle comprend un moyen commun de commande du coulissement transversal de chacun des châssis de support (41, 51) constitué d'au moins un vérin (35) centré sur un axe parallèle au plan moyen de travail (Q) et comprenant un élément fixe (35a) monté sur la charpente de support (34) et un élément mobile portant un organe de saisie (35b) constitué d'une tête d'accrochage ayant un profil, en section transversale, identique à celui du chemin longitudinal (36) supérieur de façon que, dans la position de travail commune, la partie (42, 52) de guidage de chaque châssis (41, 51) de support d'outillage, s'engage sur la tête d'accrochage (35b) du vérin (35).

5. Machine de raccordement selon l'une des revendications 1 à 4, **caractérisée par le fait que** les moyens (37) de commande du coulissement longitudinal du chariot porte-outils (3) comprennent un dispositif de réglage fin (37b) pour le positionnement précis d'au moins l'un des chemins (33) de guidage transversaux et du châssis de support correspondant (41, 51) par rapport au plan moyen de travail (Q).

6. Machine de raccordement selon l'une des revendications 2 à 5, **caractérisée par le fait que** l'organe de saisie (35b) du moyen commun (35) de coulissement transversal s'engage sur une partie conjuguée (42, 52) de chaque châssis (41, 51) de support d'outillage, avec une possibilité de jeu dans le sens longitudinal permettant un positionnement précis dudit châssis (41, 51) par rapport au plan moyen de travail (Q).

7. Machine de raccordement selon l'une des revendications précédentes, **caractérisée par le fait que** l'outillage de coupe (4) comprend deux organes de cisaillage (43, 43') maintenus écartés l'un de l'autre d'une distance fixe pour la coupe, respectivement, d'un bord aval (m1) et d'un bord amont (m2) sur les deux bandes (M1, M2) maintenues, respectivement, par le premier (2) et le second (2') organes de maintien, suivant deux lignes de cisaillement parallèles, écartées l'une de l'autre d'une distance constante (d).

8. Machine de raccordement selon la revendication 7 **caractérisée par le fait que** les deux organes de cisaillage (43, 43') sont montés sur le chariot porte-outils (3), que le dispositif de réglage (37) détermine, par déplacement longitudinal du chariot (3), le positionnement précis d'un premier organe de cisaillage (43) par rapport au premier organe de maintien (2) pour le réglage d'une distance de porte-à-faux déterminée (p1) sur l'extrémité aval de la première bande (M1), entre la ligne de cisaillement (m1) correspondante et le premier organe de maintien (2) et que la machine comprend des moyens (14) de déplacement longitudinal du bâti mobile (1') par rapport au bâti fixe (1) permettant le positionnement précis du second organe de maintien (2') par rapport au premier (2) pour le réglage d'une distance de porte-à-faux déterminée (p2) entre le second organe de maintien (2') et la ligne de cisaillement (m2) de l'extrémité amont de la seconde bande (M2).

9. Machine de raccordement selon l'une des revendications 7 et 8, **caractérisée par le fait que** l'outillage de coupe (4) forme une cisaille double comprenant deux organes de cisaillage (43, 43') montés sur un châssis de support commun (41) et définissant respectivement deux plans de cisaillement parallèles (Q1, Q2) écartés d'une distance fixe (d).

10. Machine de raccordement selon la revendication 9 **caractérisée par le fait que** le châssis de support commun (41) est monté coulissant sur le chariot porte-outils (3) perpendiculairement à l'axe de défilement (x'x) et comprend deux bras, respectivement supérieur (41a) et inférieur (41b) s'étendant, respectivement, au-dessus et en dessous du plan de défilement (P1) de la bande et que chaque organe de cisaillage (43, 43') est constitué d'une paire de lames circulaires respectivement supérieure (43a) (43'a) et inférieure (43b) (43'b) montées rotatives autour d'axes parallèles à la direction de défilement (x'x), respectivement sur les deux bras (41a, 41b) du châssis (41), le bras supérieur (41a) portant les deux lames supérieures (43a, 43'a) et le bras inférieur (41b) portant les deux lames inférieures (43b, 43'b), les deux lames de chaque paire (43) (43') se recouvrant partiellement dans un plan de cisaillement (Q1) (Q2) perpendiculaire à l'axe de défilement (x'x) de la bande.

11. Machine de raccordement selon la revendication 10, **caractérisée par le fait que** les deux paires de lames (43, 43') sont préalablement placées du côté opposé au chariot porte-outils (3) par avancement du châssis de support (41) avant la mise en place de la seconde bande (M2) et que le cisaillage se fait par traction en ramenant le châssis de support (41) sur le chariot, après avancement de la seconde bande (M2), serrage des organes de maintien (2, 2') et réglage des distances de porte-à-faux (p1, p2) sur les extrémités, respectivement aval et amont des deux bandes (M1, M2).

12. Machine de raccordement selon la revendication 11, **caractérisée par le fait que** les lames supérieures (43a, 43b) des deux paires (43, 43') sont portées par un montant vertical (44) articulé autour d'un axe horizontal sur le bras de support (41a) de façon à pivoter légèrement entre une première position de cisaillage par traction, pour laquelle l'axe de la lame supérieure (43a) est décalé en arrière par rapport à l'axe de la lame inférieure (43b), dans le sens de déplacement du châssis (41) vers le chariot (3), le montant vertical (44) prenant appui sur une butée fixe (45) du bras de support (41a), et une seconde position de cisaillage par poussée pour laquelle l'axe de la lame supérieure (43a) est ramené au moins au niveau de l'axe de la lame inférieure (43b) lorsque le châssis (4) est repoussé vers les bandes (M1, M2), le montant vertical (44) prenant appui sur une butée réglable (45'), le cisaillage étant fait par traction dans la première position du montant (44), avant la soudure des bandes et le cisaillage étant effectué, en cas de besoin, par poussée, après la soudure, dans la seconde position, du montant (44), lorsque les bandes doivent être séparées pour refaire la soudure.

13. Machine de raccordement selon l'une des revendications précédentes, **caractérisée par le fait que** chaque organe de maintien (2, 2') comprend une paire de mâchoires, respectivement inférieure (23, 23') et supérieure (24, 24') placées de part et d'autre du plan moyen (P1) de défilement des bandes, l'une (23, 23') des mâchoires de chaque paire étant fixée sur le bâti correspondant (1, 1') et l'autre mâchoire (24, 24') étant montée déplaçable verticalement sur ledit bâti correspondant, chaque mâchoire (23, 24) étant équipée d'un mors de serrage amovible (21, 22).

14. Machine de raccordement selon la revendication 13, **caractérisée par le fait que** chaque organe de maintien (2, 2') comprend une mâchoire inférieure (23, 23') fixée sur le bâti correspondant (1, 1') et équipée d'un mors inférieur (21, 21') monté coulissant, perpendiculairement à la direction de défilement, sur ladite mâchoire inférieure (23, 23'), et une mâchoire supérieure (24, 24') déplaçable verticalement et équipée d'un mors supérieur (22, 22') fixé de façon amovible sur ladite mâchoire supérieure (24) de façon à pouvoir être détaché de celle-ci pour reposer sur le mors inférieur (21, 21'), l'ensemble des deux mors (21, 22) (21', 22') pouvant être retiré de la machine et replacé dans celle-ci par coulissement transversal du mors inférieur (22, 22') sur la mâchoire inférieure (23, 23').

15. Machine de raccordement selon la revendication 14, **caractérisée par le fait qu'**au moins l'une des deux mâchoires (23) est munie d'au moins un lardon en double T (71), mobile verticalement, s'étendant suivant une direction perpendiculaire à la direction de défilement (x'x), et ayant une partie externe (71a) à section en T, s'étendant en saillie par rapport à la mâchoire (23), pour s'engager dans une rainure conjuguée du mors correspondant (21) et une partie interne (71b) à section en T inversée, logée dans un évidement transversal (72) ménagé dans ladite mâchoire inférieure (23) et constituant un piston limitant deux chambres d'un vérin à double effet, susceptibles d'être alimentées en fluide, respectivement de chaque côté dudit piston (71b) respectivement, pour le clampage du mors (21) sur la mâchoire correspondante (23) et pour l'écartement dudit mors (21).

16. Machine de raccordement selon la revendication 15, **caractérisée par le fait que** la mâchoire inférieure (23) est fixée au bâti et est munie de deux lardons mobiles (71) de maintien du mors inférieur (21), et que la partie supérieure en T (71a) de chaque lardon mobile (71) est munie, sur sa face supérieure d'au moins deux galets de roulement (73) prenant appui sur le fond de la rainure pour le support dudit mors (21) avec possibilité de coulissement de ce dernier dans la position soulevée des lardons (71).

17. Machine de raccordement selon l'une des revendications 14 à 16, **caractérisée par le fait que** la mâchoire supérieure est munie d'un moyen de fixation amovible du mors supérieur comprenant au moins deux vérins de clampage ayant chacun une tige (75) monté pivotante autour d'un axe vertical, chaque tige étant munie, à son extrémité, de deux parties alignées (76) formant des crochets susceptibles de s'engager dans une cavité (77) ménagée dans le mors (22) en passant par un trou oblong de forme correspondante et de s'appliquer contre le fond de ladite cavité (76), de part et d'autre du trou oblong, après rotation de la tige (75), pour le clampage du mors (22) sur la mâchoire (24) au moyen des vérins (75).

18. Machine de raccordement selon l'une des revendications précédente, **caractérisée par le fait qu'**elle est équipée d'un outillage de remplacement (6) comprenant au moins un organe d'accrochage coulissant (62) monté sur un chemin de guidage transversal (33c) du chariot porte-outils (3) et susceptible de s'engager de façon amovible sur au moins l'un des mors (21, 22) de chacun des organes de maintien (2, 2') pour retirer du bâti (1, 1') ledit mors (21, 22) et l'amener sur le chariot de support (3) par coulissement sur le chemin de guidage transversal (33c) et, inversement, pour replacer dans le bâti (1,1') un mors de remplacement.

19. Machine de raccordement selon la revendication 18, **caractérisée par le fait que** le mors supérieur (22, 22') est monté de façon amovible sur la mâchoire supérieure (24, 24') et vient reposer sur le mors inférieur (21, 21') pour le démontage et le remontage simultané des deux mors (21, 22) (21', 22') au moyen de l'outillage de remplacement (6).

20. Machine de raccordement selon l'une des revendications 18 et 19, **caractérisée par le fait que** l'organe (62) d'accrochage des mors est monté sur une table de support (61) déplaçable transversalement sur le chemin de guidage transversal (33c) du chariot porte-outils (3) entre une position avancée vers les deux bâtis (1, 1') pour l'accrochage des mors (21, 22) (21', 22') et une position reculée sur le chariot porte-outils (3) pour le transport des mors démontés (21, 22) (21', 22').

21. Machine de raccordement selon la revendication 13, **caractérisée par le fait que** la mâchoire fixe en hauteur d'au moins l'un des deux organes de maintien (2, 2') est associée à une cale (29) d'épaisseur réglable, interposée entre au moins une partie (23a) de ladite mâchoire (23) et le mors correspondant (21) pour aligner les plans moyens des deux bandes (M1, M2).

22. Machine de raccordement selon l'une des revendications précédentes, **caractérisée par le fait que** l'outillage de soudure est constitué par les deux paires de mors (21, 22) (21', 22') des deux organes (2, 2') de maintien, respectivement, des deux bandes (M1, M2), lesdites paires de mors (21, 22) (21', 22') étant reliées respectivement à deux pôles d'une source de courant électrique (8) pour la réalisation de la soudure bord à bord par étincelage.

23. Machine de raccordement selon la revendication 22, **caractérisée par le fait qu'**au moins les parties de chaque mors de serrage (21, 22) (21', 22') en contact avec la bande (M1) (M2) sont séparées, respectivement, de la mâchoire correspondante (23, 24) (23', 24') par une couche isolante électriquement (27) et sont reliées, respectivement, à chacun des deux pôles de la source de courant électrique (8) par des circuits isolés électriquement pour la réalisation de la soudure par le passage du courant uniquement dans lesdits mors et les deux bandes.

24. Machine de raccordement selon l'une des revendications précédentes, **caractérisée par le fait que** l'outillage de soudure comprend une torche de soudage au défilé, en particulier à laser, à plasma ou à arc, montée sur un châssis de support (81) déplaçable sur un chemin (33d) de guidage transversal ménagé sur le chariot porte-outils (3), pour la soudure des bords en vis à vis, respectivement aval et amont, des deux bandes.

25. Machine de raccordement selon l'une des revendications précédentes, **caractérisée par le fait que** les réglages de positionnement au moins longitudinal de tous les outillages sont effectués à partir du bâti fixe (1) qui sert de référence commune pour toutes les opérations.

26. Machine de raccordement selon la revendication 25, **caractérisée par le fait que**, après serrage de l'extrémité aval de la première bande (M1), le premier organe de maintien (2) reste serré jusqu'à la fin des opérations de raccordement, le bâti fixe (1) servant de référence de positionnement pour tous les outillages et toutes les opérations.

27. Machine de raccordement selon la revendication 25, **caractérisée par le fait que**, après réalisation de la soudure, le premier organe de maintien (2) monté sur le bâti fixe (1) est desserré, le second organe de maintien (2') restant serré, le bâti mobile (1') est reculé pour centrer les bords soudés sur l'outillage d'aplanissement (5), l'organe de maintien (2) du bâti fixe (1) est alors resserré et l'organe de maintien (2') du bâti mobile (1') est desserré et reculé pour laisser le passage à l'outillage d'aplanissement (5).

28. Machine de raccordement selon l'une des revendications précédentes, **caractérisée par le fait que**, chaque organe de maintien (2, 2') comprenant une mâchoire fixe (23) et une mâchoire mobile (24), au moins le châssis (51) de support de l'outillage d'aplanissement (5) est muni d'au moins une partie (54a) de guidage horizontal susceptible de s'engager, par déplacement transversal du châssis (51), sur une partie (18) de profil conjugué ménagée au moins sur la mâchoire mobile (24) de l'organe de maintien (2) monté sur le bâti fixe (1) et formant au moins un rail de guidage horizontal pour l'ajustage automatique de l'outillage d'aplanissement (5) à l'épaisseur de la bande soudée.

29. Machine de raccordement selon la revendication 28, **caractérisée par** le-fait que au moins une partie (54a) de guidage horizontal de l'outillage d'aplanissement (5) est montée coulissante, perpendiculairement à la direction de défilement (x'x), sur la partie de guidage conjuguée (18) ménagée au moins sur la mâchoire mobile (24) de l'organe de maintien fixe (2) et que l'outillage d'aplanissement (5) couvre, sur les deux faces des bandes soudées (M1, M2), une bande de largeur suffisante pour recouvrir la soudure, compte-tenu des possibilités de réglage de la distance de porte-à-faux entre le premier organe de maintien (2) et le bord aval (m1) de la première bande (M1) après cisaillement.

30. Machine de raccordement selon l'une des revendications précédentes, **caractérisée par le fait que** l'outillage d'aplanissement (5) est une raboteuse munie de deux séries de pastilles de coupe (53) placées respectivement au dessus et en dessous du plan de défilement pour réaliser le rabotage de la soudure sur les deux faces des bandes après soudure.

31. Machine de raccordement selon l'une des revendications précédentes, **caractérisée par le fait que** les deux organes de maintien, respectivement fixe (2) et mobile (2'), sont équipés chacun d'une paire de volets mobiles (82, 82') montés pivotants, respectivement sur les quatre mors de serrage (21, 22, 21', 22') et associés à des moyens (86) de commande du basculement desdits volets (82, 82') entre une position relevée pour le réglage de position et le passage des outils et une position rabattue de limitation d'un espace confiné dans lequel peut être injecté un gaz limitant l'oxydation pendant la soudure, les volets opposés se recouvrant partiellement.

## Claims

1. A machine for connecting metallic bands running in succession along a mean plane (P1) substantially horizontal and along a longitudinal running axis (x'x) comprising:
- a fixed frame (1) centred on the running axis (x'x) and on which is mounted a first two-grip (21, 22) clamping device (2) for clamping the downstream extremity, in the running direction, of a first band (M1),
- a mobile frame (1') centred on the running axis (x'x) and movable parallel to the latter with respect to the fixed frame (1), whereas the said movable frame (1') carries a second two-grip clamping device (2') for clamping the upstream extremity of a second band (M2) following the first one (M1) and,
- at least three toolings for the connection of the second band (M2) to the first one (M1), respectively,
- a cutting tooling (4) comprising two devices (43, 43') for simultaneous shearing of two opposite parallel edges, respectively downstream (m1) and upstream (m2), on the extremities of both bands (M1, M2), once the latter have been clamped respectively in the first and second clamping devices (2, 2'), whereas each edge is shorn off at a cantilever distance (p1, p2) determined with respect to the corresponding clamping grips (21, 22, 21', 22'),
- a butt-welding tooling (8) of both bands (M1, M2) after bringing the latter closer to one another by moving the mobile frame (1'),
- a planing tooling (5) for removing the matter in excess on both faces of the welded bands (M1, M2),
**characterized in that** it comprises :
- a tool-carriage (3) mounted to slide on a longitudinal guiding path (31) extending on a first side of both frames, parallel to the running axis (x'x),
- at least two transversal guiding paths (33a, 33b) arranged beside one another on the tool-carriage (3) and perpendicular to the running axis (x'x),
- at least two supporting chassis (41, 51), each to support one of the connecting toolings, whereby the said supporting chassis (41, 51) are mounted to slide, respectively, each on one of the said transversal guiding paths (33a, 33b),
- means (37) to control the sliding motion of the tool-carriage (3) along the longitudinal guiding path (31), to position one of the transversal guiding paths (33a, 33b), substantially in a common working position, centred on a mean plane (Q) orthogonal to the running axis,
- means (35) to control the transversal sliding motion of each of the said chassis (41, 51) of the supporting tooling, one after the other, on the corresponding transversal guiding path (33a, 33b), after placing the said path into the said common working position, in order to actuate the tooling (4, 5) carried by the said chassis (41, 51) and to perform the corresponding operation, parallel to the same mean working plane (Q), on the opposite edges, respectively downstream (m1) and upstream (m2), of both bands (M1, M2).

2. A connecting machine according to claim 1, **characterized in that** the means to control the transversal sliding motion of the tooling supporting chassis (41, 51) comprise common means (35) arranged at the level of the common working position and movable perpendicular to the running axis while bearing upon a fixed structure (34), whereby the said common means (35) are provided with a pick-up device (35b) capable to engage in a removable way onto a corresponding matching section (42, 52) of each tooling supporting chassis (41, 51) when the said chassis (41, 51) is in the common working position.

3. A connecting machine according to one of claim 1 or 2, **characterized in that** the tool-carriage (3) is mounted to move on a lower longitudinal sliding path (31) arranged on a floor (10) beside the machine (A) and associated with an upper parallel sliding path (36) arranged on a supporting structure (34) and onto which engages a corresponding guiding section (42, 52) by a sliding motion, of matching shape, arranged on each tooling supporting chassis (41, 51), whereas the said upper longitudinal path (36) comprises two sections (36a, 36b) extending respectively on both sides of a stop located at the level of the common working plane and whose width (1) is sufficient to enable transversal displacement of either tooling supporting chassis (41, 51).

4. A connecting machine according to claim 3, **characterized in that** it comprises a common means for controlling the sliding motion of each supporting chassis (41, 51), comprising at least one jack (35) centred on an axis parallel to the mean working plane (Q) and comprising a fixed element (35a) mounted on the supporting structure (34) and a mobile element carrying a pick-up device (35b) consisting of a hooking head whose profile, in transversal section, is identical to that of the upper longitudinal path (36) so that, in the common working position of each tooling supporting chassis (41, 51), the guiding section (42, 52) of each tooling supporting chassis (41, 51) engages onto the hooking head (35b) of the jack (35).

5. A connecting machine according to one of claims 1 to 4, **characterized in that** the control means (37) of the longitudinal sliding motion of the tool-carriage (3) comprises a thin adjustment device (37b) for accurate positioning of at least one transversal guiding path (33) and of the corresponding supporting chassis (41, 51) with respect to the mean working plane (Q).

6. A connecting machine according to one of claims 2 to 5, **characterized in that** the pick-up device (35b) of the transversal sliding common means (35) engages onto a matching section (42, 52) of each tooling supporting chassis (41, 51) with a certain clearance in the longitudinal direction enabling accurate positioning of the said chassis (41, 51) with respect to the mean working plane (Q).

7. A connecting machine according to one of the previous claims, **characterized in that** the cutting tooling (4) comprises two shearing devices (43, 43') maintained at fixed distance for cutting, respectively, the downstream extremity (m1) and the upstream extremity (m2) of both bands (M1, M2) maintained, respectively, by the first (2) and the second (2') clamping devices, along two parallel shearing lines, spaced from one another by a constant distance (d).

8. A connecting machine according to claim 7, **characterized in that** both shearing devices (43, 43') are mounted on the tool-carriage (3), the adjustment device (37) determines, by longitudinal displacement of the carriage (3), the accurate positioning of a first shearing device (43) with respect to the first clamping device (2) in order to adjust a set cantilever distance (p1) on the downstream extremity of the first band (M1), between the corresponding shearing line (m1) and the first clamping device (2) and that the machine comprises means (14) for longitudinal displacement of the mobile frame (1') with respect to the fixed frame (1) which enables accurate positioning of the second clamping device (2') with respect to the first (2) in order to adjust a set cantilever distance (p2) between the second clamping device (2') and shearing line (m2) at the upstream extremity of the second band (M2).

9. A connecting machine according to one of claims 7 or 8, **characterized in that** the cutting tooling (4) comprises double shears having two shearing devices (43, 43') mounted on a common supporting chassis (41) and delineating respectively two parallel shearing planes (Q1, Q2) spaced by a fixed distance (d).

10. A connecting machine according to claim 9, **characterized in that** the common supporting chassis (41) is mounted to slide on the tool-carriage (3) perpendicular to the running axis (x'x) and comprises two arms, respectively upper (41a) and lower (41b), extending respectively above and beneath the running plane (P1) of the band and each shearing device (43, 43') comprises a pair of circular blades, respectively upper (43a, 43'a) and lower (43b, 43'b), mounted to rotate around axes parallel to the running direction (x'x), respectively on both arms (41a, 41b) of the chassis (41), whereas the upper arm (41a) carries both upper blades (43a, 43'a) and the lower arm (41b) carries both lower blades (43b, 43'b), whereby both blades of each pair (43, 43') overlap each other partially on a shearing plane (Q1, Q2) perpendicular to the running direction (x'x) of the band.

11. A connecting machine according to claim 10, **characterized in that** both pairs of blades (43, 43') are placed in advance on the side opposite the tool-carriage (3) whereas the supporting chassis (41) is moved forward before the second band (M2) is placed in position and the shearing process takes place by a pulling action whereas the supporting chassis (41) is brought onto the carriage, after moving the second band (M2) forward, closing the clamping devices (2, 2') and adjusting the cantilever distances (p1, p2) at the extremities, respectively downstream and upstream of both bands (M1, M2).

12. A connecting machine according to claim 11, **characterized in that** the upper blades (43a, 43b) of both pairs (43, 43') are supported by a vertical post (44) hinged around a horizontal axis on the supporting arm (41 a) in order to pivot slightly from a first pull-shearing position, for which the axis of the upper blade (43a) is offset backwards with respect to the axis of the lower blade (43b), in the running direction of the chassis (41) toward the carriage (3), whereas the vertical post (44) bears on a fixed stop (45) of the supporting arm (41a), to a second push-shearing position for which the axis of the upper blade (43a) is retracted at least at the level of the axis of the lower blade (43b) when the chassis (4) is pushed away toward the bands (M1, M2), whereas the vertical post (44) bears on an adjustable stop (45'), whereby pull-shearing takes place in the first position of the post (44), before the bands are welded, but push-shearing can also be performed after welding, in the second position, of the post (44) in case when the bands must be separated for re-welding.

13. A connecting machine according to one of the previous claims, **characterized in that** each clamping device (2, 2') comprises a pair of jaws, respectively lower (23, 23') and upper (24, 24'), placed on both sides of the mean running plane (P1) of the bands, whereby one (23, 23') of the jaws of each pair is fixed on the corresponding frame (1, 1') and the other jaw (24, 24') is mounted movable vertically on the said corresponding frame, each jaw (23, 24) being provided with a removable clamping grip (21, 22).

14. A connecting machine according to claim 13, **characterized in that** each clamping device (2, 2') comprises a lower jaw (23, 23') fixed on the corresponding frame (1, 1') and provided with a lower grip (21, 21') mounted to slide perpendicular to the running direction, on the said lower jaw (23, 23') and an upper jaw (24, 24') movable vertically and provided with an upper grip (22, 22') fixed in a removable way on the said upper jaw (24) in order to be detached from the latter and to rest on the lower grip (21, 21'), whereas the two-grip assembly (21, 22, 21', 22') can thus be removed from the machine and replaced into the latter whereas the lower grip (22, 22') slides transversally onto the lower jaw (23, 23').

15. A connecting machine according to claim 14, **characterized in that** at least one of both jaws (23) is provided with at least one double T gib (71), mobile vertically, extending along a direction perpendicular to the running direction (x'x), and with a T-shaped external section (71a), protruding with respect to the jaw (23), to engage into a matching groove of the corresponding grip (21) and a reverted T-shaped internal section (71b) placed in a transversal recess (72) arranged in the said lower jaw (23) and constituting a piston delineating two chambers of a double-action cylinder, capable of been supplied with fluid, respectively on each side of the said piston (71b) respectively, for clamping the grip (21) onto the corresponding jaw (23) and for moving the said grip (21) away.

16. A connecting machine according to claim 15, **characterized in that** the lower jaw (23) is fixed to the frame and is provided with two mobile gibs (71) for clamping the lower grip (21) and **in that** the upper T-shaped section (71a) of each mobile gib (71) is provided, on its upper face, with at least two track rollers (73) bearing on the bottom of the groove in order to support the said grip (21) whereas the latter may raise the gibs (71) by sliding into upward position.

17. A connecting machine according to one of claims 14 to 16, **characterized in that** the upper jaw is provided with a removable fastening means for the upper grip comprising at least two clamping jacks, each with a stem (75) mounted to pivot around a vertical axis, whereas each stem is provided, at its extremity, with two aligned sections (76) forming hooks, capable to engage into a cavity (77) arranged in the grip (22) by passing through an oblong hole of corresponding shape and to force against the bottom of the said cavity (76), on both sides of the oblong hole, after rotation of the stem (75), in order to clamp the grip (22) onto the jaw (24) using the jacks (75).

18. A connecting machine according to one of the previous claims, **characterized in that** it is provided with a replacement tooling (6) comprising at least one sliding hooking device (62) mounted on a transversal guiding path (33c) arranged on the tool-carriage (3) and capable to engage in a removable way, at least on one of the grip (21, 22) of each clamping device (2, 2') in order to extract from the frame (1, 1') the said grip (21, 22) and to bring it onto the tool-carriage (3) by sliding on the transversal guiding path (33c) and, conversely, to put a replacement grip back into the frame (1, 1').

19. A connecting machine according to claim 18, **characterized in that** the upper grip (22, 22') is mounted in a removable way on the upper jaw (24, 24') and rests on the lower grip (21, 21') for simultaneous disassembly and reassembly of both grips (21, 22, 21', 22') using the replacement tooling (6).

20. A connecting machine according to one of claims 18 or 19, **characterized in that** the hooking device (62) of the grips is mounted on a supporting table (61) movable transversally on the transversal guiding path (33c) of the tool-carriage (3) between a forward position directed toward both frames (1, 1') for hooking the grips (21, 22, 21', 22') and a retracted position on the tool-carriage (3) for conveying the dismantled grips (21, 22, 21', 22').

21. A connecting machine according to claim 13, **characterized in that** the fixed height jaw of at least one of both clamping devices (2, 2') is associated with an adjustable block (29), interposed between at least a section (23a) of the said jaw (23) and the corresponding grip (21) in order to align the mean planes of both bands (M1, M2).

22. A connecting machine according to one of the previous claims, **characterized in that** the welding tooling comprises both pairs of grips (21, 22, 21', 22') of both clamping devices (2, 2'), respectively, of both bands (M1, M2), whereby the said pairs of grips (21, 22, 21', 22') are connected respectively to both poles of a source of electric current (8) for flash butt-welding.

23. A connecting machine according to claim 22, **characterized in that** at least the sections of each clamping grip (21, 22, 21', 22') in contact with the band (M1, M2) are separated, respectively, from the corresponding jaw (23, 24, 23', 24') by an electrically insulating layer (27) and are connected, respectively, to each of both poles of the source of electric current (8) via electrically insulated circuits in order to perform the welding operation by passing the current exclusively through the said grips and both bands.

24. A connecting machine according to one of the previous claims, **characterized in that** the welding tooling comprises a continuous welding torch, for instance a laser, plasma or arc-welding torch, mounted on a supporting chassis (81) movable on a transversal guiding path (33d) arranged on the tool-carriage (3) for butt-welding of the edges, respectively downstream and upstream, of both bands,

25. A connecting machine according to one of the previous claims, **characterized in that** the positioning adjustments, at least longitudinal, of all the toolings, are performed from the fixed frame (1) serving as a reference for all the operations.

26. A connecting machine according to claim 25, **characterized in that** after clamping the downstream extremity of the first band (M1), the first clamping device (2) remains in clamped position until completion of the connection operations, whereas the fixed frame (1) serves as a position reference for all the toolings and all the operations.

27. A connecting machine according to claim 25, **characterized in that** on completion of the welding, the first clamping device (2) mounted on the fixed frame (1) opens, the second clamping device (2') remains in clamped position, the mobile frame (1') moves back for centring the welded edges on the flattening tooling (5), the clamping device (2) of the fixed frame (1) closes again and the clamping device (2') of the mobile frame (1') opens and retracts to allow passage of the flattening tooling (5).

28. A connecting machine according to one of the previous claims, **characterized in that** each (2, 2') clamping device comprising a fixed jaw (23) and a mobile jaw (24), at least the supporting chassis (51) of the flattening tooling (5) is provided with at least one horizontal guiding part (54a) capable to engage, by transversal displacement of the chassis (51), on a matching profile section (18) arranged at least on the mobile jaw (24) of the clamping device (2) mounted on the fixed frame (1) and forming at least a horizontal guiding rail for automatic adjustment of the flattening tooling (5) according to the thickness of the welded band.

29. A connecting machine according to claim 28, **characterized in that** at least one horizontal section (54a) for guiding the flattening tooling (5) is mounted to slide perpendicular to the running direction (x'x), on the matching guiding section (18) arranged at least on the mobile jaw (24) of the fixed clamping device (2) and **in that** the flattening tooling (5) covers, on both faces of the welded bands (M1, M2), a band of sufficient width to cover the welded spot, taking into account the adjustment possibilities of the cantilever distance between the first clamping device (2) and the downstream edge (m1) of the first band (M1) upon completion of the shearing process.

30. A connecting machine according to one of the previous claims, **characterized in that** the flattening tooling (5) is a planing tooling comprising two sets of cutting pellets (53) located respectively above and beneath the running plane in order to plane both faces of the welded spot after completion of the welding process.

31. A connecting machine according to one of the previous claims, **characterized in that** both clamping devices, respectively fixed (2) and mobile (2'), are each provided with a pair of mobile flaps (82, 82') mounted to pivot, respectively, on the four clamping grips (21, 22, 21', 22') and associated with means (86) to control the tipping of the said flaps (82, 82') between a raised position for positioning adjustment and passage of the toolings and a retracted position in order to delineate a confined space in which a neutral or reducing gas can be injected to limit oxidation during the welding process, whereas the opposite flaps overlap each other partially.

## Patentansprüche

1. Maschine zum Verbinden von Metallbändern, die entlang einer wesentlich horizontalen mittleren Ebene (P1) und gemäß einer Längsdurchlaufachse (x'x) nacheinander durchlaufen, bestehend aus:
- einem feststehenden, auf die Durchlaufachse (x'x) zentrierten Gestell (1), auf dem ein erstes Festhalteelement (2) mit zwei Klemmstücke (21, 22) zum Festklemmen abwärts des Endes eines ersten Bandes (M1) in Durchlaufrichtung montiert ist,
- einem auf die Durchlaufachse (x'x) zentrierten beweglichen Gestell (1'), das parallel zu dieser und zu dem feststehenden Gestell (1) verfahrbar ist, wobei dieses bewegliche Gestell (1') ein zweites Festhalteelement (2') mit zwei Klemmstücke zum Festklemmen aufwärts des Endes eines zweiten Bandes (M2) gemäß dem ersten Band (M1) trägt, und
- jeweils mindestens drei Werkzeuge zum Verbinden des zweiten Bandes (M2) mit dem ersten Band (M1),
- einem Schneidwerkzeug (4) mit zwei Scherteilen (43, 43') zum gleichzeitigen Trennen der beiden gegenüberliegenden an den Enden der beiden Bänder (M1, M2) befindlichen jeweils abwärts (m1) bzw. aufwärts (m2) parallelen Kanten, nach dem Festklemmen derselben jeweils in dem ersten bzw. dem zweiten Festhalteelement (2, 2'), wobei das Abscheren jeder Kante in einem bestimmten freitragenden Abstand (p1, p2) zu den entsprechenden Klemmstücke (21, 22) (21', 22') erfolgt,
- einem Werkzeug (8) zum Stumpfschweißen der beiden Bänder (M1, M2) nach dem Zusammenführen der Kanten durch das Verschieben des beweglichen Gestells (1'),
- einem Werkzeug (5) zum Abgleichen der Schweißnaht durch Entfernen von überschüssigem Werkstoff auf den beiden Seiten der verschweißten Bänder (M1, M2),
**dadurch gekennzeichnet, daß** sie umfaßt:
- ein Werkzeugwagen (3), der auf einer längsverlaufenden, sich über eine erste Seite der beiden Gestelle parallel zu der Durchlaufrichtung (x'x) erstreckenden Führungsbahn (31) gleitend montiert ist,
- mindestens zwei transversale nebeneinander auf dem Werkzeugwagen (3) senkrecht zur Durchlaufrichtung (x'x) angeordnete Führungsbahnen (33a, 33b),
- mindestens zwei Tragrahmen (41, 51) von je einem der Verbindungswerkzeuge, wobei jeder dieser Tragrahmen (41, 51) jeweils auf einer dieser transversalen Führungsbahnen (33a, 33b) gleitend montiert ist,
- Steuerungsmittel (37) der Gleitbewegung des Werkzeugwagens (3) entlang der longitudinalen Führungsbahn (31) zwecks Positionierung der einen bzw. der anderen dieser transversalen Führungsbahnen (33a, 33b) wesentlich in ein und derselben gemeinsamen Arbeitsstellung, die auf eine zur Durchlaufachse orthogonale Mittelebene (Q) zentriert ist,
- Mittel (35) zur Steuerung der transversalen Gleitbewegung nacheinander eines jeden dieser Werkzeugtragrahmen (41, 51) auf der entsprechenden transversalen Führungsbahn (33a, 33b), nach der Positionierung dieser Bahn in dieser gemeinsamen Arbeitsstellung zwecks Einsatz der von diesem Tragrahmen (41, 51) mitgeführten Werkzeuge (4, 5) und Durchführung des entsprechenden Arbeitsvorganges parallel zu ein und derselben Arbeitsmittelebene (Q) auf den einander gegenüberliegenden je abwärts (m1) bzw. aufwärts (m2) Kanten der beiden Bänder (M1, M2),

2. Verbindungsmaschine nach Anspruch 1, **dadurch gekennzeichnet, daß** die Steuerungsmittel zur transversalen Gleitbewegung der Werkzeugtragrahmen (41, 51) aus einem gemeinsamen in der Höhe der gemeinsamen Arbeitsstellung angeordneten senkrecht zur Durchlaufrichtung verfahrbaren Mittel (35) bei Abstützung auf einer feststehenden Stützkonstruktion (34) besteht,, wobei dieses gemeinsame Mittel (35) ein Greifmittel (35b) aufweist, das auf einem entsprechenden zugeordneten Teil (42, 52) von jedem Werkzeugtragrahmen (41, 51) lösbar zum Eingriff kommen kann, wenn sich dieser Tragrahmen (41, 51) in der gemeinsamen Arbeitsstellung befindet.

3. Verbindungsmaschine nach einem der Ansprüche 1 und 2, **dadurch gekennzeichnet, daß** der Werkzeugtragrahmen (3) auf einer unteren longitudinalen auf einem Boden (10) neben der Maschine (A) angeordneten Glleitbahn (31) verfahrbar montiert ist, der eine obere auf einer Stützkonstruktion befindliche parallele Gleitbahn (36) zugeordnet ist, auf welcher ein entsprechendes, als zugeordnete formschlüssig ausgebildetes, auf dem jeweiligen Werkzeugtragrahmen (41, 51) angeordnetes Führungsteil (42, 52) durch Gleiten eingreift, wobei diese aus zwei Teilen (36a, 36b) bestehende obere longitudinale Bahn (36) sich jeweils beiderseits einer in der Höhe der gemeinsamen Arbeitsstellung mit einer ausreichenden Breite (1) befindlichen Unterbrechung erstreckt, um die transversale Bewegung von dem einen bzw. dem anderen dieser Werkzeugtragrahmen (41, 51) zu ermöglichen.

4. Verbindungsmaschine nach Anspruch 3, **dadurch gekennzeichnet, daß** sie ein gemeinsames Steuerungsmittel der transversalen Gleitbewegung eines jeden dieser Tragrahmen (41, 51) umfaßt, das aus mindestens einem auf die zur Arbeitsmittelebene (Q) parallelen Achse zentrierten Zylinder (35) besteht und ein feststehendes auf der Stützkonstruktion (34) montiertes Teil (35a) und ein bewegliches Teil mit einem (35b) Greifmittel aufweist, das aus einem Einhängekopf mit einem im Querschnitt demjenigen der oberen longitudinalen Bahn (36) entsprechenden Profil besteht, so daß das Führungsteil (42, 52) des jeweiligen Werkzeugtragrahmens (41, 51) in der gemeinsamen Arbeitsstellung in den Einhängekopf (35b) des Zylinders (35) eingreift.

5. Verbindungsmaschine nach einem der Ansprüche 1 bis 4, **dadurch gekennzeichnet, daß** die Steuerungsmittel (37) der längsgerichteten Gleitbewegung des Werkzeugwagens (3) eine Feineinstellvorrichtung (37b) zum genauen Positionieren mindestens einer der transversalen Führungsbahnen (33) und des entsprechenden Tragrahmens (41, 51) zur Arbeitsmittelebene (Q) aufweisen.

6. Verbindungsmaschine nach einem der Ansprüche 2 bis 5, **dadurch gekennzeichnet, daß** das Greifelement (35b) des gemeinsamen transversalen Gleitmittels (35) in ein zugeordnetes Teil (42, 52) von jedem Werkzeugtragrahmen (41, 51) mit einem möglichen Spiel in Längsrichtung eingreift, um eine genaue Positionierung dieses Rahmens (41, 51) zur Arbeitsmittelebene (Q) zu ermöglichen.

7. Verbindungsmaschine nach einem der vorangehenden Ansprüche, **dadurch gekennzeichnet, daß** das Schneidwerkzeug (4) zwei Trennelemente (43, 43') umfaßt, die für den Scherschnitt je abwärts einer Kante (m1) bzw. aufwärts einer Kante (m2) auf den beiden Bänder (M1, M2) in einem festen Abstand voneinander gehalten werden, die jeweils durch das erste (2) bzw. das zweite (2') Halteelement gemäß zwei parallelen in einem konstanten Abstand (d) voneinander gehaltenen Abscherlinien festgehalten werden.

8. Verbindungsmaschine nach Anspruch 7, **dadurch gekennzeichnet, daß** die beiden Trennelemente (43, 43') auf dem Werkzeugwagen (3) montiert sind, daß die Einstellvorrichtung (37) durch Längsverschiebung des Wagens (3) die genaue Positionierung eines ersten Schneidelementes (43) zum ersten Halteelement (2) zur Einstellung eines bestimmten freitragenden Abstandes (p1) abwärts am Ende des ersten Bandes (M1) zwischen der entsprechenden Abscherlinie (m1) und dem ersten Festhalteelement (2) bestimmt,, und daß die Maschine Mittel (14) zum Längsverschieben des beweglichen Gestells (1') gegenüber dem feststehenden Gestell (1) aufweist, um die genaue Positionierung des zweiten Festhalteelement (2') zum ersten (2) zu ermöglichen zwecks Einstellung einer bestimmten freitragenden Entfernung (p2) zwischen dem zweiten Festhalteelement (2') und der Abscherlinie (m2) aufwärts des Endes des zweiten Bandes (M2).

9. Verbindungsmaschine nach einem der Ansprüche 7 und 8, **dadurch gekennzeichnet, daß** das Schneidwerkzeug (4) als Doppelschere mit zwei auf einem gemeinsamen Tragrahmen angeordneten Abscherteile (43, 43') ausgebildet ist, die je zwei parallele in einem festen Abstand (d) voneinander befindlichen Abscherebenen (Q1, Q2) bestimmen.

10. Verbindungsmaschine nach Anspruch 9, **dadurch gekennzeichnet, daß** der gemeinsame Tragrahmen (41) gleitend auf dem Werkzeugwagen (3) senkrecht zur Durchlaufachse (x'x) montiert ist und zwei jeweils über bzw. unter der Durchlaufebene (P1) des Bandes sich erstreckende Arme, je ein oberer (41a) bzw. ein unterer (41b) aufweist, und daß jedes Abscherteil (43, 43') aus einem Paar Kreismesser, je ein oberes (43a, 43'a) bzw. ein unteres (43b, (43'b) besteht, die drehbar um parallele Achsen zur Durchlaufrichtung (x'x) jeweils auf den beiden Armen (41a, 41b) des Tragrahmens (41) montiert sind, wobei der Oberarm (41a) die beiden oberen Messer (43a, 43'a) und der Unterarm (41b) die beiden unteren Messer (43b, 43'b) aufnimmt, und die beiden Messer von jedem Paar (43, 43') sich teilweise in einer Abscherebene (Q1) (Q2) senkrecht zur Durchlaufachse (x'x) des Bandes überdecken.

11. Verbindungsmaschine nach Anspruch 10, **dadurch gekennzeichnet, daß**, vor der Anordnung des zweiten Bandes (M2), die beiden Paar Messer (43, 43') vorab auf der entgegengesetzten Seite zum Werkzeugwagen (3) durch Vorschub des Tragrahmens (41) in Stellung gebracht werden, und daß der Scherschnitt mittels Zug bei Zurückführung des Tragrahmens (41) auf den Wagen nach dem Vorschub des zweiten Bandes (M2), dem Festklemmen der Festhalteelemente (2, 2') und der Einstellung der freitragenden Abstände (p1, p2) an den Enden, jeweils abwärts bzw. aufwärts, der beiden Bänder (M1, M2) erfolgt.

12. Verbindungsmaschine nach Anspruch 11, **dadurch gekennzeichnet, daß** die oberen Messer (43a, 43b) der beiden Paare (43, 43') an einem Vertikalständer angebaut sind, der um eine Horizontalachse auf dem Tragarm (41a) so angelenkt ist, daß er leicht zwischen einer ersten Scherschnittstellung mittels Zug schwenkbar ist, in welcher die Achse des oberen Messers (43a) zur Achse des unteren Messers (43b) in der fahrbaren Richtung des Rahmens (41) zum Wagen (3) hin nach hinten versetzt ist, wobei der Vertikalständer (44) auf einem Festlager (45) des Tragarmes (41a) aufliegt, und einer zweiten Scherschnittstellung mittels Schub, in welcher die Achse des oberen Messers (43a) mindestens in Höhe der Achse des unteren Messers (43b) zurückgefahren wird, wenn der Rahmen (4) zu den Bänder hin (M1, M2) zurückgestoßen wird, wobei der Senkrechtständer (44) auf einem einstellbaren Lager (45') zur Auflage kommt, und wobei der Scherschnitt in der ersten Lage des Ständers (44) vor dem Zusammenschweißen der Bänder mittels Zug erfolgt und der Scherschnitt, falls notwendig, mittels Schub erfolgt nach dem Schweißvorgang in der zweiten Lage des Ständers (44), wenn die Bänder getrennt werden müssen zur Wiederholung der Schweißnaht.

13. Verbindungsmaschine nach einem der vorangehenden Ansprüche, **dadurch gekennzeichnet, daß** jedes Festhalteelement (2, 2') ein Paar Backen, je eine untere (23, 23') bzw. eine obere (24, 24') umfasst, die beiderseits der Durchlaufmittelebene (P1) der Bänder angeordnet sind, wobei eine (23, 23') der Backen von jedem Paar auf dem entsprechenden Gestell (1, 1') befestigt und die andere Backe (24, 24') senkrecht verfahrbar auf diesem entsprechenden Gestell montiert ist, und jede Bache (23, 24) mit einem lösbaren Klemmteil (21, 22) versehen ist.

14. Verbindungsmaschine nach Anspruch 13, **dadurch gekennzeichnet, daß** jedes Festhalteelement (2, 2') eine auf dem entsprechenden Gestell (1, 1') befestigte Unterbacke (23, 23') mit einem senkrecht zur Durchlaufrichtung auf dieser Unterbacke (23, 23') gleitend montiertes unteres Klemmteil (21, 21') und eine senkrecht verfahrbare Oberbacke mit einem oberen auf dieser Oberbacke (24) lösbar befestigtes Klemmteil (22, 22') aufweist zur Trennung von derselben und Auflage auf dem unteren Klemmteil (21, 21'), wobei die gesamte Einheit der beiden Klemmteile (21, 22) (21', 22') aus der Maschine herausgefahren und durch transversales Gleiten des oberen Klemmteils (22, 22') auf der unteren Backe (23, 23') wieder in diese eingefahren werden kann.

15. Verbindungsmaschine nach Anspruch 14, **dadurch gekennzeichnet, daß** mindestens eine der beiden Backen (23) mindestens ein senkrecht bewegliches Doppel-T-Stück (71) aufweist, das sich gemäß einer Richtung senkrecht zur Durchlaufrichtung (x'x) erstreckt, und ein Aussenteil (71a) mit T-Querschnitt umfasst, das sich vorspringend zur Backe (23) erstreckt, um in eine formschlissig zugeordnete Rille des entsprechenden Klemmteils (21) einzugreifen und ein Innenteil (71b) mit verkehrtem T-Querschnitt, das in einer in dieser Unterbacke (23) angeordnete transversalen Aussparung (72) untergebracht ist und ein Kolben bildet, der zwei Kammern eines doppelwirkenden Zylinders begrenzt, die beiderseits dieses Kolbens mit einem Medium versorgt werden können zum Festklemmen des Klemmteils (21) auf der entsprechenden Backe (23) und Spreizen dieses Klemmteils (21).

16. Verbindungsmaschine nach Anspruch 15, **dadurch gekennzeichnet, daß** die Unterbacke (23) auf dem Gestell befestigt ist und zwei bewegliche Keile (71) zum Festhalten des unteren Klemmteils (21) aufweist, und daß das T förmige Oberteil (71a) von jedem beweglichen Keil (71) auf dessen Oberfläche mindestens zwei Lagerrollen (73) aufweist, die am Rillenboden aufliegen zur Abstützung dieses Klemmteils (21) mit einer möglichen Gleitbewegung des letzteren in der angehobenen Stellung des Keile (71).

17. Verbindungsmaschine nach einem der Ansprüche 14 bis 16, **dadurch gekennzeichnet, daß** die Oberbacke mindestens ein lösbares Befestigungsmittel des oberen Klemmteils aufweist, bestehend aus mindestens zwei Klemmzylinder mit jeweils einer um eine Senkrechtachse schwenkbar montierte Stange (75), wobei jede Stange an ihrem Ende zwei ausgerichtete als Haken ausgebildete Teile (76) aufweist, die in eine in dem Klemmteil (22) angeordnete Aussparung (77) durch ein längliches Loch entsprechender Form eingeführt und am Boden dieser Aussparung (76) an beiden Seiten des länglichen Loches nach der Rotation der Stange (75) zum Blockieren des Klemmteils (22) auf der Backe (24) durch die Zylinder (75) angreifen

18. Verbindungsmaschine nach einem der vorangehenden Ansprüche, **dadurch gekennzeichnet, daß** sie mit einem Ersatzwerkzeug (6) ausgerüstet ist, das mindestens ein auf der transversalen Führungsbahn (33c) des Werkzeugwagens (3) montiertes gleitendes Einhängeelement (62) umfaßt und auf mindestens einem der Klemmteile (21, 22) von jedem Festhalteelement (2, 2') eingreifen kann, um dieses Klemmteil (21, 22) aus dem Gestell (1, 1') herauszufahren und es auf dem Tragwagen (3) durch Gleiten auf der transversalen Führungsbahn (33c) abzusetzen und umgekehrt, ein Ersatzklemmteil in dem Gestell (1, 1') einzusetzen.

19. Verbindungsmaschine nach Anspruch 18, **dadurch gekennzeichnet, daß** das obere Klemmteil (22, 22') auf der Oberbacke (24, 24') lösbar montier ist und für den Ausbau und den gleichzeitigen Wiedereinbau des beiden Klemmteile (21, 22) (21', 22') durch das Ersatzwerkzeug (6) auf dem unteren Klemmteil (21, 21') zur Auflage kommt.

20. Verbindungsmaschine nach einem der Ansprüche 18 und 19, **dadurch gekennzeichnet, daß** das Einhängeelement (62) der Klemmteile auf einem Auflagetisch (61) montiert ist, der auf der transversalen Führungsbahn (33c) des Werkzugwagens (3) zwischen einer vorgezogenen Stellung zu den beiden Gestellen hin (1, 1') zum Einhängen der Klemmteile (21, 22) (21', 22') und einer zurückgezognen Stellung auf dem Werkzeugwagen (3) für den Transport der ausgebauten Klemmteile (21, 22) (21', 22') quer verfahrbar ist.

21. Verbindungsmaschine nach Anspruch 13, **dadurch gekennzeichnet, daß** der in der Höhe unbewegliche Backe mindestens eines der beiden Festhalteelemente (2, 2') eine in der Dicke regelbare Scheibe (29) zugeordnet ist, die zwischen mindestens einem Teil (23a) dieser Backe (23) und dem entsprechenden Klemmteil (21) zur Ausrichtung der Mittelebenen der beiden Bänder (M1, M2) dazwischengeschaltet ist.

22. Verbindungsmaschine nach einem der vorangehenden Ansprüche, **dadurch gekennzeichnet, daß** das Schweißwerkzeug aus den zwei Paar Klemmteile (21, 22) (21', 22') der beiden Festhalteelemente (2, 2') der beiden Bänder (M1, M2) besteht, wobei diese Paar Klemmteile (21, 22) (21', 22') jeweils mit zwei Polen einer elektrischen Stromquelle zur Herstellung der Schweißnaht durch Abbrennstumpfscheißen verbunden sind.

23. Verbindungsmaschine nach Anspruch 22, **dadurch gekennzeichnet, daß** mindestens die mit dem Band (M1) (M2) in Kontakt befindlichen Teile von jedem Klemmstück (21, 22) (21', 22') der entsprechenden Backe (23, 24) (23', 24') durch eine elektrische Isolationsschicht getrennt sind und jeweils mit jedem der beiden Pole der elektrischen Stromquelle (8) über zwei isolierte Stromkreise verbunden sind zur Herstellung der Schweißnaht durch die Stromführung nur in diesen Klemmstücken und den beiden Bänder.

24. Verbindungsmaschine nach einem der vorangehenden Ansprüche, **dadurch gekennzeichnet, daß** das Schweißwerkzeug ein Durchlaufschweißbrenner, insbesondere mit Laser, Plasma oder Lichtbogen umfasst, der auf einem Tragrahmen (81) montiert ist, welcher auf der auf dem Werkzeugwagen (3) angeordnete transversale Führungsbahn (33d) verfahrbar ist, zum Schweißen der jeweils abwärts bzw. aufwärts gegenüberliegenden Kanten der beiden Bänder.

25. Verbindungsmaschine nach einem der vorangehenden Ansprüche, **dadurch gekennzeichnet, daß** die Einstellungen mindestens der Längspositionierung sämtlicher Werkzeuge von dem festen als gemeinsame Referenz für aller Vorgänge dienende Gestell (1) aus erfolgen.

26. Verbindungsmaschine nach Anspruch 25, **dadurch gekennzeichnet, daß**, nach dem Festklemmen abwärts des Endes des ersten Bandes(M1), das erste Festhalteelement (2) bis zum Ende der Verbindungsoperationen geklemmt bleibt, wobei das feststehende Gestell (1) als Positionierungsreferenz für alle Werkzeuge und alle Operationen dient.

27. Verbindungsmaschine nach Anspruch 25, **dadurch gekennzeichnet, daß**, nach Herstellung der Schweißung, das erste auf dem feststehenden Gestell (1) montierte Festhalteelement (2) gelöst wird, wobei das zweite Festhalteelement (2') geklemmt bleibt, das bewegliche Gestell (1') zurückgefahren wird um die Schweißkanten auf das Ausgleichwerkzeug (5) zu zentrieren, wobei das Festhalteelement (2) auf dem feststehenden Gestell (1) dann geklemmt und das Festhalteelement (2') auf dem beweglichen Gestell (1') gelöst und zurückgefahren wird um den Durchgang für das Ausgleichwerkzeug (5) freizugeben.

28. Verbindungsmaschine nach einem der vorangehenden Ansprüche, **dadurch gekennzeichnet**, wobei jedes Festhalteelement (2, 2') eine feststehende Backe (23) und eine bewegliche Backe (24) aufweist, daß mindestens der Tragrahmen (51) mit dem Ausgleichwerkzeug (5) mindestens ein horizontales Führungsteil (54a) umfaßt, das durch transversales Verschieben des Rahmens (51) in ein formschlüssig zugeordnetes Profilteil (18) eingreift, das mindestens auf der beweglichen Backe (24) des auf dem feststehenden Gestell (1) montierten Festhalteelement (2) angeordnet ist und mindestens eine horizontale Führungsschiene bildet zur automatischen Anpassung des Ausgleichwerkzeugs (5) an die geschweißte Banddicke.

29. Verbindungsmaschine nach Anspruch 28, **dadurch gekennzeichnet, daß** mindestens ein horizontales Führungsteil (54a) des Ausgleichwerkzeugs (5) auf dem zugeordneten Führungsteil (18) senkrecht zur Durchlaufrichtung (x'x) gleitend montiert ist, das mindestens auf der beweglichen Backe (24) des feststehenden Elementes (2) angeordnet ist, und daß das Ausgleichwerkzeug (5) auf den beiden Seiten der zusammengeschweißten Bänder (M1, M2) eine ausreichende Bandbreite abdeckt zur Abdeckung der Schweißnaht, unter Berücksichtigung der Einstellmöglichkeiten der freitragenden Entfernung zwischen dem ersten Festhalteelement (2) und abwärts der Kante (m1) des ersten Bandes (M1) nach dem Scherschnitt.

30. Verbindungsmaschine nach einem der vorangehenden Ansprüche, **dadurch gekennzeichnet, daß** das Ausgleichwerkzeug (5) eine Hobelmaschine ist mit zwei Reihen Schneidplättchen (53), die jeweils über und unter der Durchlaufebene angeordnet sind, zum Abhobeln der Schweißnaht auf den beiden Bandseiten nach der Schweißung.

31. Verbindungsmaschine nach einem der vorangehenden Ansprüche, **dadurch gekennzeichnet, daß** die beiden Festhalteelemente, jeweils das feststehende (2) und das bewegliche (2'), jeweils mit ein Paar beweglichen Klappen (82, 82') versehen sind, die schwenkbar jeweils auf den vier Klemmstücken (21, 22, 21', 22') montiert sind und denen Steuerungsmittel (86) zum Kippen dieser Klappen (82, 82') zwischen einer aufgeklappten Lage zur Positionseinstelllung und Werkzeugdurchgang und einer abgeklappten Lage zur Begrenzung eines eingeschlossenen Raumes, in welchen ein Gas zur Hemmung der Oxydierung während des Schweißvorganges eingeblasen werden kann, wobei die einander gegenüberliegenden Klappen sich teilweise überlappen.
